# EUROPEAN PATENT APPLICATION

(11) **EP 2 309 352 A1**
(43) Date of publication of application: **13.04.2011**
(21) Application number: 09252261.4
(22) Date of filing: 23.09.2009
(51) Int. Cl.: G05B 19/042, B62K 25/04, B60G 17/06, B60G 17/08, F16F 9/50, H04L 12/40

(54) **Bicycle distributed computing arrangement and method of operation**

(71) Applicant: Cannondale Bicycle Corporation, Bethel, CT 06801 (US)
(72) Inventor: Song, Stanley, San Francisco California 94109 (US)
(74) Representative: Chiva, Andrew Peter

(57) **Abstract**

A bicycle is disclosed having a control system with a user interface and an active suspension system. The control system includes a one or more sensors arranged to measure and transmit a signal indicative of the terrain over which the bicycle is being ridden. The active suspension system includes a valve box that is fluidly coupled to each chamber of the lower cylinder. An orifice in the valve box is changed in size in response to a signal from a sensor associated with the front wheel that changes the response of the suspension system due to changing terrain conditions. The user interface includes a selection device mounted to the handlebars that allows the user to change parameters of the active suspension system during operation of the bicycle.

## Description

### CROSS REFERENCE TO RELATED APPLICATIONS

The present application is a continuation in part of United States Patent Application S/N 12/258,525 entitled "Bicycle User Interface System and Method of Operation Thereof" filed on October 27, 2008, which claims priority to United States Provisional Patent Application S/N 61/023,201 entitled "Bicycle Electronic Suspension and Control System and Method of Operation Thereof' filed on January 24, 2008, both of which are incorporated by reference herein in their entirety.

### BACKGROUND OF THE INVENTION

The present disclosure relates generally to a bicycle, and particularly to features of a bicycle, such as a control system, a user interface and a suspension system.

Bicycle suspension systems, such as those used with mountain or all-terrain type bicycles, aid the rider by stabilizing the bicycle through the absorption of energy caused by impacts with the terrain, such as may result from depressions, logs, rocks, stream beds and bumps. Typically, the bicycle suspension system includes a hydraulic system consisting of upper and lower tubes that are arranged to slide axially over each other. A damper valve separates a pair of chambers in the upper and lower tubes. The damper valve controls the flow of a viscous fluid or a gas from one chamber that result in a damping of the impulses caused by the terrain.

During operation, when the bicycle encounters uneven terrain, the outer and inner tubes slide axially to compress in a telescoping manner. This movement of the tubes forces the fluid to flow from one chamber to the other. Subsequently, during a rebound movement, the tubes will slide axially in the opposite direction causing them to expand. The expansion results in the fluid being forced to flow in the opposite direction. Since the valve setting of the damper valve is usually fixed prior to riding, the amount of damping provided by the suspension system may, at times, either be too soft resulting in a loss of energy from the rider, or too stiff resulting in a loss of stability.

To compensate for this, some suspension systems have been proposed that include a mechanical or hydraulic lockout arrangement that prevents the compression or extension of the tubes. This provides efficiency advantages to the rider during periods where the terrain is relatively even, on a street or hard-packed surface for example, since little of the energy exerted by the rider will be absorbed by the suspension system. Still other systems provided arrangements where the suspension system was not activated until the terrain imparted a threshold impact force, typically set at a high level.

While existing suspension systems are suitable for their intended purposes, there still remains a need for improvements particularly regarding bicycle suspension systems and user interface control systems that allow the suspension characteristics to be changed while the bicycle is being operated and in response to terrain conditions.

### BRIEF DESCRIPTION OF THE INVENTION

In accordance with one aspect of the invention, a distributed control system for a bicycle is provided. The system includes a plurality of functional components, each functional component having an associated microcontroller having an address. A controller having at least one input and at least one output. A communication bus operably coupling the controller with each of the microcontrollers. Wherein the controller includes a first processor responsive to executable computer instructions when executed on the first processor for transmitting a first signal comprised of an address and a first data on the communication bus.

In accordance with another aspect of the invention, another distributed control system for a bicycle is provided. The system includes a controller and a battery electrically coupled to the controller. At least one first sensor is coupled to the battery, wherein the at least one first sensor is coupled to measure a characteristic of the battery. A first microcontroller is electrically coupled between the controller and the battery, and operably coupled to the at least one first sensor, wherein the first microcontroller comprises a first processor responsive to executable computer instructions when executed on the first processor for sending a first signal to the controller in response to a second signal being received by the first microcontroller from the at least one first sensor.

In accordance with another aspect of the invention, a method of operating a bicycle suspension system with a bicycle control system having a graphical user interface including a processor, a display and a selection device is provided. The method includes the step of transmitting a first signal from a first functional component to a first microcontroller associated with the first functional component. The first microcontroller translates the first signal into a second signal compatible with a controller. The second signal is transmitted from the first microcontroller to the controller.

A product is further provided comprising any feature disclosed herein, either explicitly or equivalently, either individually or in combination with any other feature disclosed herein, in any configuration.

Other embodiments of the invention include a product having any feature disclosed herein, explicitly or equivalently, either individually or in combination with any other feature disclosed herein, in any configuration.

### BRIEF DESCRIPTION OF THE DRAWINGS

Referring to the exemplary drawings wherein like elements are numbered alike in the accompanying Figures:

Figure 1 illustrates a side plan view of an exemplary embodiment of a bicycle in accordance with an embodiment of the invention;

Figure 2 illustrates an isometric view of a hydraulic suspension system having a valve box in accordance with the exemplary embodiment of Figure 1;

Figure 3 illustrates an isometric view of the hydraulic suspension system of Figure 2 with the valve box removed;

Figure 4 illustrates a side sectional view of the piston, shaft and cylinder arrangement illustrated in Figure 3;

Figure 5A illustrates a detail sectional view of the hydraulic suspension system of Figure 4;

Figure 5B - 5E illustrates a detail sectional view of an alternate embodiment suspension system of Figure 4;

Figure 6 illustrates a schematic representation of the valve box of Figure 2;

Figure 7 illustrates a sectional view of the steering tube head assembly in accordance with the exemplary embodiment of Figure 1;

Figures 8 illustrates an isometric view of the steering tube head assembly of Figure 7;

Figure 9 illustrates an exploded isometric view of the steering tube head assembly of Figure 8;

Figure 10 illustrates an isometric view of the bicycle handle bar with a user interface in accordance with the exemplary embodiment of Figure 1;

Figure 11 illustrates an isometric view of the user interface of Figure 10;

Figure 12 illustrates a plan view of the user interface level of Figure 11;

Figure 13A illustrates a schematic representation of an exemplary embodiment of a distributed control system;

Figure 13B illustrates a spindle having an accelerometer used in the distributed control system of Figure 13A

Figure 13C illustrates a suspension system having the spindle of Figure 13B;

Figure 14 illustrates a schematic representation of the distributed control system in accordance with an exemplary embodiment;

Figure 15 illustrates an exemplary embodiment of a menu selection display for an exemplary bicycle control system;

Figure 16A illustrates a "Ride Mode" selection display for the bicycle control system in accordance with the exemplary embodiment of Figure 15;

Figures 16B and 16C illustrate an exemplary damping curve and command curve used with the control system of Figure 15;

Figures 17-19 illustrate the setup display menus for adjusting the respective ride mode parameters for the cross-country, all-mountain, and down-hill ride modes;

Figure 20 illustrates the setup display menu for travel management of the suspension system;

Figure 21 illustrates the setup display menus for adjusting parameters for a lock-out mode of operation;

Figure 22 illustrates the setup display menus for adjusting parameters particular to characteristics of the rider;

Figure 23 illustrates the display for viewing histogram data collected during operation of the bicycle;

Figure 24 illustrates the display menu for shutting down the control system of Figure 13A; and,

Figure 25 illustrates a flow chart diagram of the method of adjusting parameters of the bicycle suspension system for a rider.

### DETAILED DESCRIPTION OF THE INVENTION

An embodiment of the invention, as shown and described by the various figures and accompanying text, provides a bicycle having one or more of the following features: a suspension system having a duel fluid flow arrangement for absorbing energy during operation; a distributed control system having a main controller connected to one or more microcontrollers that manage multiple sensors; a user interface providing positive tactile feedback to the rider; a control system display providing the rider with a means for monitoring the condition and operation of the bicycle; and a menu driven graphical user interface providing a means for the rider to interact with the main controller and adjust different parameters associated with the suspension system. The controller provides a centralized control, with multiple microcontrollers being used to independently to provide function control of the various functional components, such as the battery, user interface device, display and valve box for example. In one embodiment, the controller communicates with microcontrollers associated with each functional component over a single communications bus.

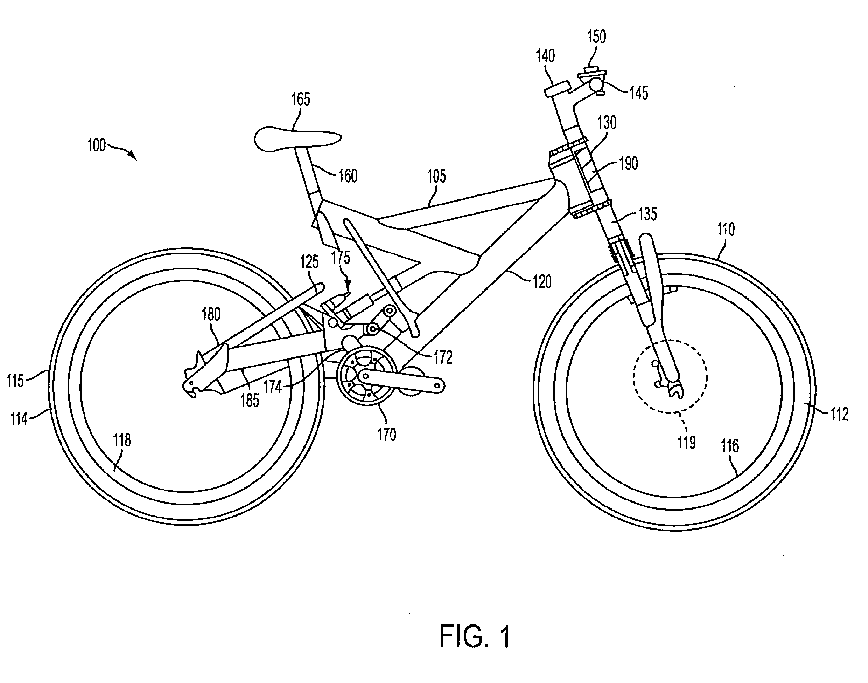

Figure 1 is an exemplary embodiment of a bicycle 100 having a bicycle frame 105 configured to receive front 110 and rear 115 wheels. Each wheel includes an inflatable tire 112, 114 which is supported by a rim 116, 118, respectively. The frame 105 includes a front section 120 and a rear section 125. The front section 120 includes a head tube 130 that is configured and dimensioned to receive a suspension system 135 and to allow a rotational degree of freedom between the head tube 130 and the suspension system 135. The suspension system 135 couples the front section 120 to the front wheel 110. As will be discussed in more detail below, the head tube 130 may also provide a mounting location for functional components, such as a display 140 and a housing for a main controller and battery.

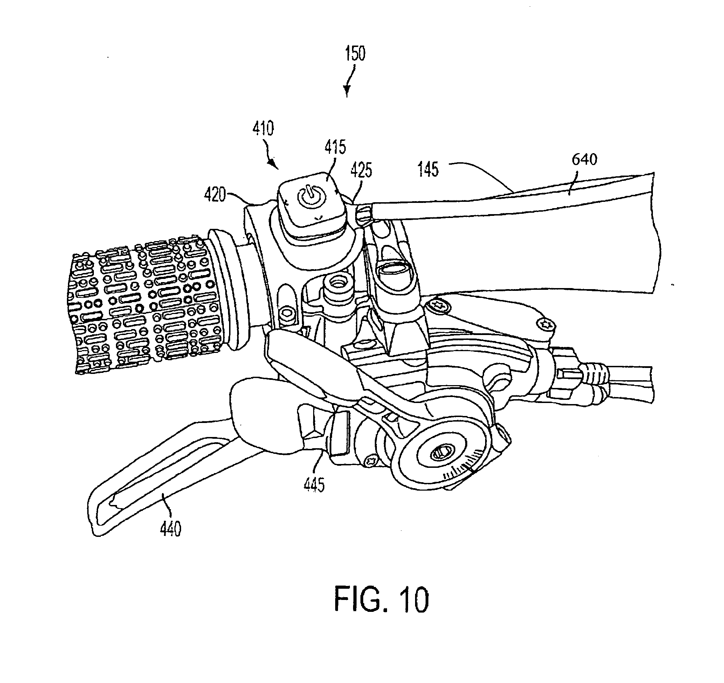

A handle bar 145 is connected to the head tube 130 to allow the rider to rotate the front wheel 110 via the suspension system 135. The handle bar 145 typically has grips and hand brake actuators (Figure 10). A user interface 150 is mounted to the handle bar 145. On the opposite end of the frame front section 120, a vertically oriented rear seat support 160 fixedly attached to at least one of the front section 120 and the rear section 125 provides support for seat 165. A crank assembly 170 is mounted to the front section 120 below the seat 165. The crank includes a gear assembly and pedals and is typically coupled to a rear wheel gear assembly (not shown) via a chain or other suitable member.

The rear section 125 is coupled to the front section 120 by a pair of linkages 172, 174 and a rear suspension system 175. The rear section 125 includes an upper tube 180 and a lower tube 185 that connect the rear wheel 115 to the front section 120. It should be appreciated that the linkages 172, 174 and rear suspension 175 pivot, allowing the rear section 125 to move independently in the same plane as the front section 120. This type of bicycle, sometimes referred to as a full suspension type, provides energy absorption and damping for both wheels 110, 115 of the bicycle 100. In an alternative embodiment, the rear suspension 175 may be omitted, creating a bicycle type sometimes referred to as a hard tail, and the rear section 125 would be fixedly attached to the front section 120.

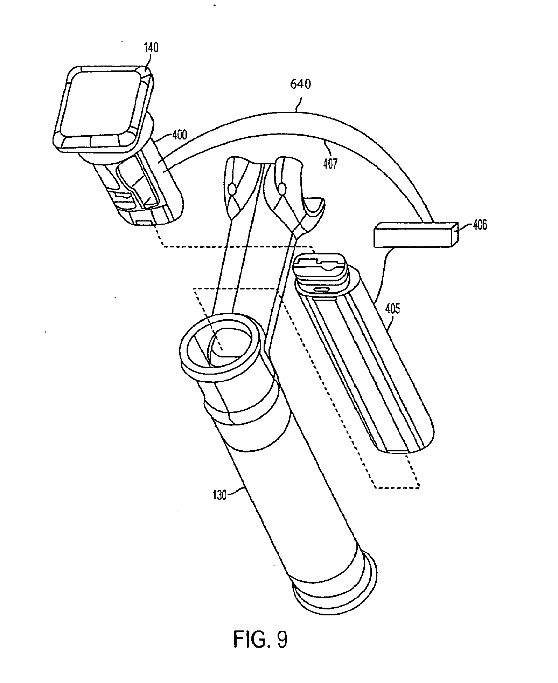

As will be described in more detail below, the bicycle 100 also includes a control system 190. The control system 190 provides the communications and processing for the operation of functional components that are the subsystems of bicycle 100, such as the suspension system 135 for example, or to provide data collection and feedback to the rider. In the exemplary embodiment, the control system 190 has a main controller 400 (Figure 9) located within the head tube 130.

While exemplary embodiments described herein will refer to the front suspension in the singular, with a single assembly providing the desired damping functionality, other embodiments are also possible and considered within the scope of the present claims. For example, the bicycle 100 may have a front fork that couples on both sides of the front wheel 110. In this embodiment, a single suspension system may be incorporated, or each side of the fork may have a separate suspension system. Alternatively, the front "fork" arrangement with suspension may be arranged on only one side of the bicycle (still referred to as a "fork" even though one "tine" is absent), such as the left side, which is sometimes referred to as a lefty. Further, the descriptions and functionality of the suspension system 135 would apply equally to the rear suspension 175.

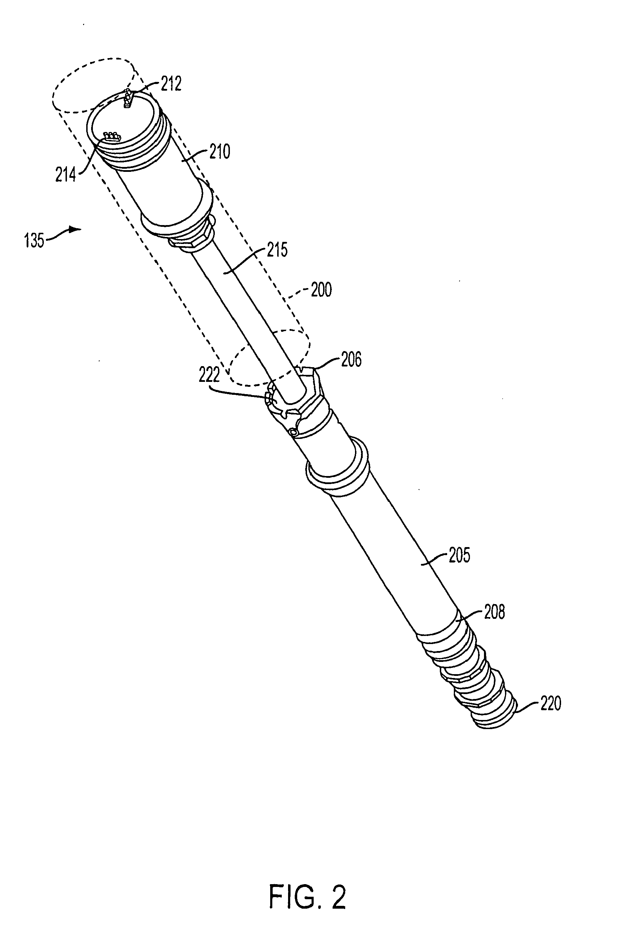

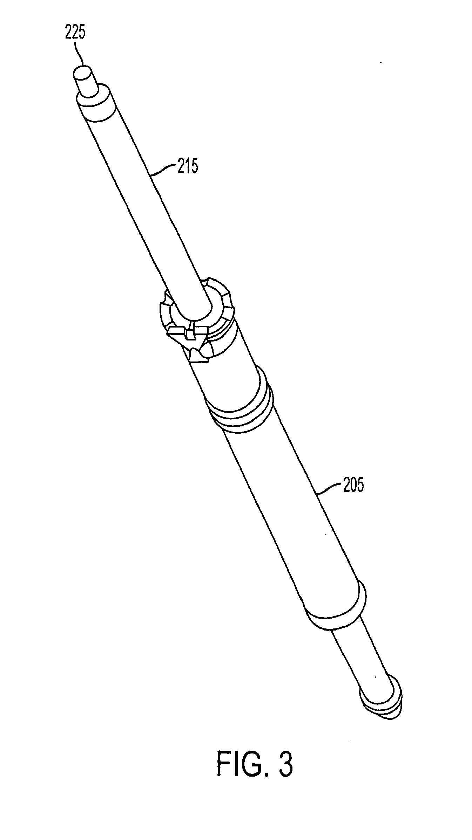

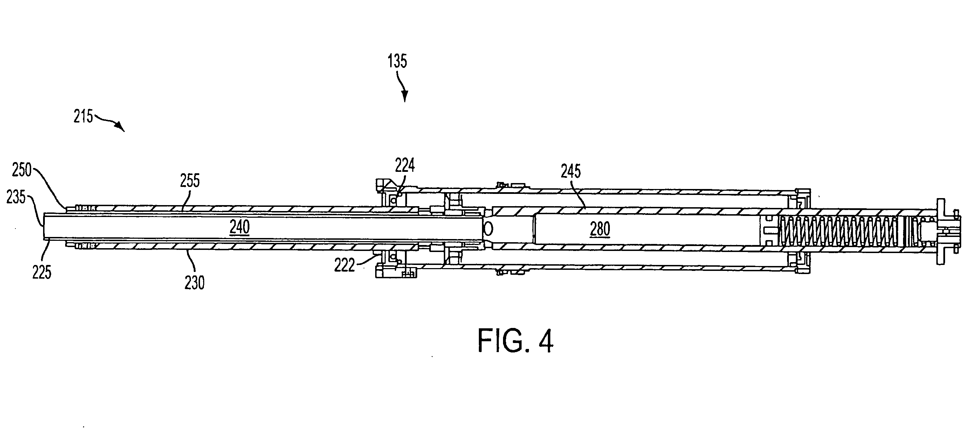

Referring to Figures 2-6, the exemplary embodiment of the front suspension 135 will be described. The suspension system 135 is housed within an upper 200 and lower 205 cylinder that are arranged to slide axially over each other during operation. In the exemplary embodiment, a valve box device 210 is arranged within the upper cylinder 200 and fixedly attached to one end of a shaft assembly 215. The valve box 210 has one or more electrical connections 212 and communications connections 214. In one embodiment, the communication connection 214 is coupled to a communications bus 640 as discussed below. The connections 212, 214 provide electrical power and communication signals from the bicycle control system 190.

In the exemplary embodiment, the suspension system 135 is a "through-shaft" type design, and the shaft assembly 215 enters through a first end 206 of the lower cylinder 205 and exits a second end 208 where the shaft assembly 215 attaches to an air piston 220. The lower cylinder first end is sealed by an end plate 222 that includes an opening sized to allow penetration by the shaft assembly 215. One or more seals 224, such as an o-ring seal or u-cup seal for example, are incorporated into the end plate 222. The seals 224 allow the shaft assembly 215 to move relative to the lower cylinder 205 while containing fluids within the lower cylinder 205 and keeping dust and debris out.

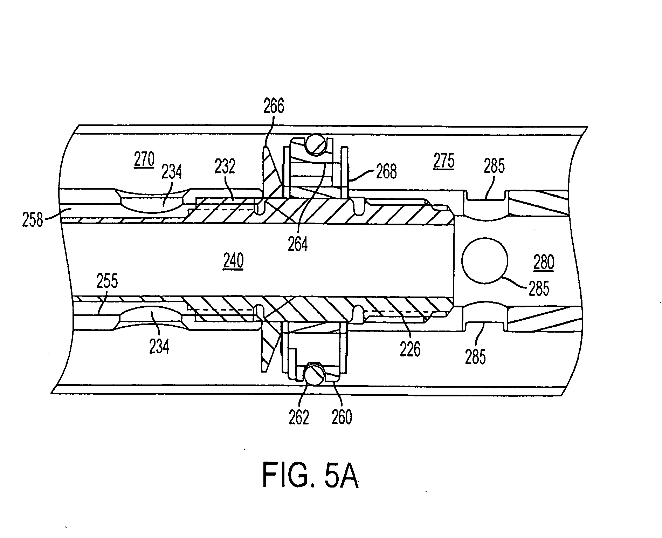

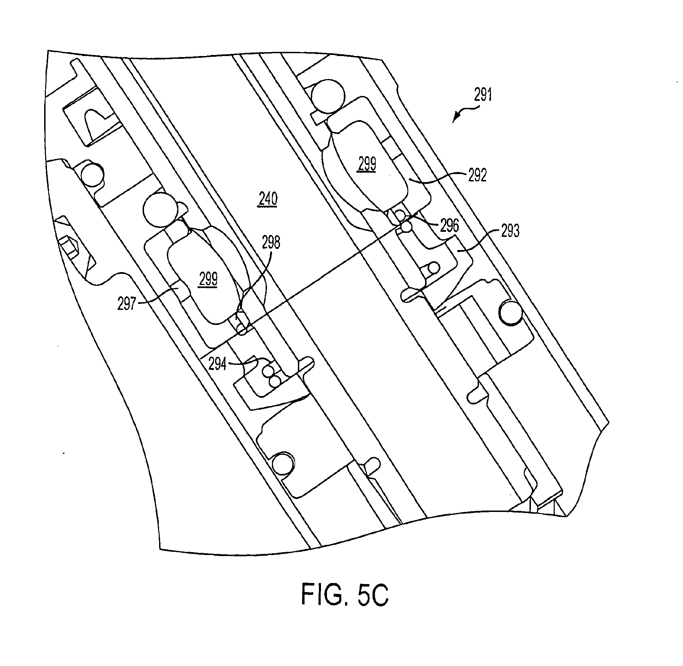

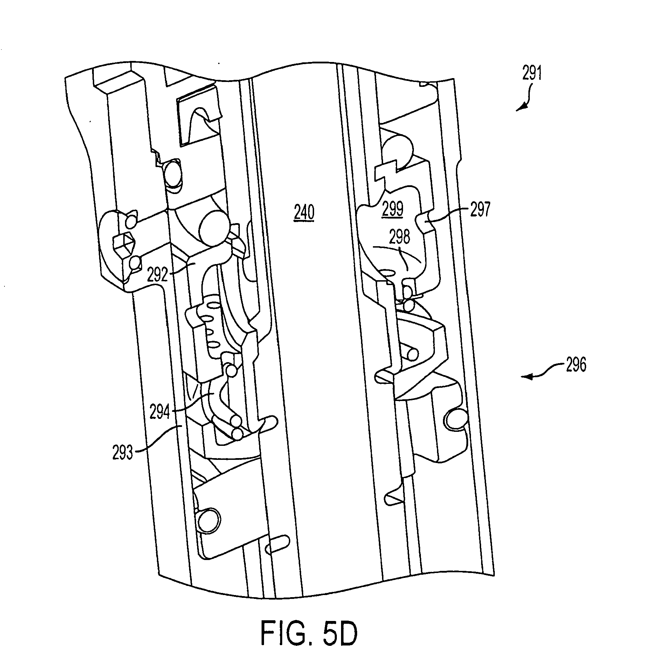

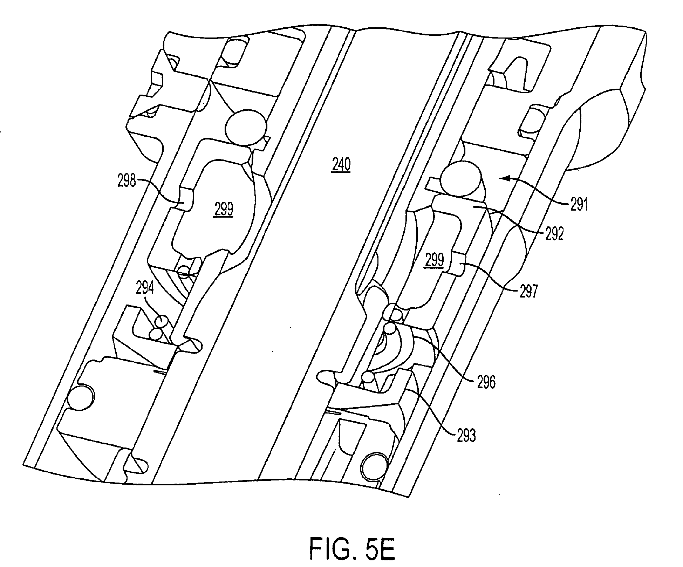

The shaft assembly 215 includes an inner shaft 225 and an outer shaft 230. The inner shaft 225 is a cylinder having an open end 235 and a borehole 240 that extends therethrough. In the exemplary embodiment, the inner shaft 225 is fixedly attached to a lower shaft 245 by a threaded portion 226 (Figure 5A). Similarly, the outer shaft 230 is a cylinder having an open end 250 and a borehole 255 that extend therethrough. The inner shaft 225 and outer shaft bore hole 255 are sized to create a gap 258 between the outer surface of the inner shaft 225 and the inner surface of the outer shaft 230. One or more holes 234 are formed in the outer shaft 230 which intersect with the borehole 255. As will be described in more detail below, the gap 258 is sized sufficient to allow the flow of oil through the borehole 255 and allows an exchange of fluid between the borehole 255 and the cylinder 205 through the holes 234. The outer shaft 230 is fixedly attached to the inner shaft 225 by a threaded portion 232.

The lower shaft 245 includes a borehole 280 that is coupled to the inner shaft borehole 240. One or more holes 285 extend through the wall of lower shaft 245. As will be described in more detail below, the holes 285 allow the exchange of fluid between the inner shaft 225, the lower shaft 245 and the lower cylinder 205. The lower shaft 245 further couples the outer shaft and inner shaft 235 to the air piston 220.

A piston 260 is coupled to the inner shaft 225 and is captured between the lower shaft 245 and the outer shaft 230. An optional spacer 266 and shim 268 may be arranged on either side of piston 260 to aid in assembly and maintain a proper fit. Shim 268 may also aid in the control of the rate of fluid exchange between the lower chamber 275 and upper chamber 270. The piston 260 is positioned within the lower cylinder 205 and divides the lower cylinder into an upper chamber 270 and a lower chamber 275. The piston 260 includes a seal 262, such as an o-ring for example, that allows the piston to move relative to the lower cylinder 205 without allowing fluid to pass from the upper chamber 270 to the lower chamber 275 along the outside diameter of the piston 260. As will be described in more detail below, one or more orifices 264 in the piston 260 are arranged to allow a controlled rate of fluid exchange between the lower chamber 275 and the upper chamber 270.

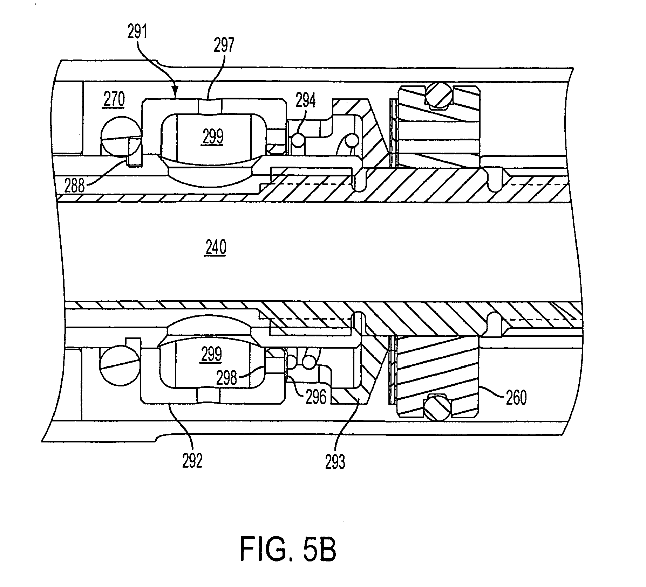

An alternate embodiment shaft assembly 215 is illustrated in Figures 5B - 5E. In this embodiment, a check valve 291 is positioned adjacent to the piston 260. The check valve 291 is comprised of a valve body 292 positioned adjacent to a piston spacer 293. A spring 294 is positioned within piston spacer 293 to hold a flapper plate 296 against the valve body 292. The valve body 292 includes a chamber 299 that is fluidly connected to the upper chamber 270 by rebound stroke holes 297 and compression stroke holes 298. The number of holes 297, 298 in valve body 292 may be changed to provide the desired performance. In the exemplary embodiment, the cumulative open area of the compression holes 298 is larger than the cumulative open area of rebound holes 297. The compression stroke holes 298 are positioned adjacent the flapper plate 296. It should be appreciated that the spring only provides a light force sufficient to hold the flapper plate 296 against the valve body 292. The check valve 291 is retained in position by a fastener, such as snap ring 288 that is coupled to the inner shaft 225.

During operation, when the shaft assembly 215 enters the rebound stroke, oil flows from upper chamber 270 through rebound stroke holes 297 into valve chamber 299, via the valve box 210 as is described in more detail below, and subsequently into the inner shaft bore holes 240. Due to hydraulic pressures in the upper chamber 270, the flapper plate 296 remains against the valve body 292 preventing fluid flow through the holes 298. When the shaft assembly 215 enters compression stroke portion of operation, fluid flows from the borehole 240 into the chamber 299 via the valve box 210 as is described in more detail below. Due to the increase in pressure in the chamber 299, the hydraulic pressure against the plate 296 causes the spring 294 to compress allowing fluid to flow through the compression holes 298. Since the opening area of the compression holes 298 is larger than the rebound holes 297, the compression holes 298 become the primary fluid flow path through the check valve 291 during the compression stroke. It should be appreciated by changing the size of holes 297, 298 different rates of fluid flow may be accomplished independent of the valve box 210 during different modes of operation.

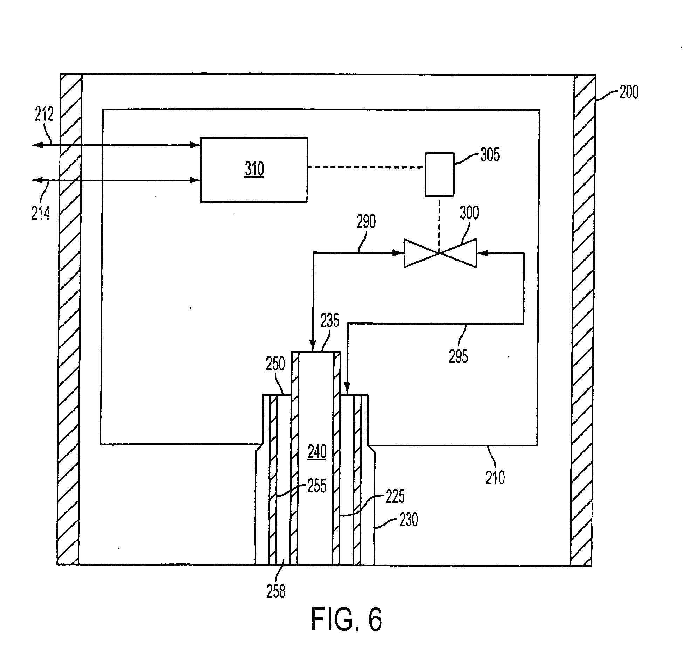

In the exemplary embodiment, the valve box 210 is fixedly attached to the end of the shaft assembly 215 as shown in Figure 6. The valve box 210 includes at least a first fluid path 290 fluidly coupled to the inner shaft bore 240, and a second fluid path 295 that is fluidly coupled to the outer shaft bore 255. The first fluid path and second fluid path are coupled by a valve 300 to allow the bi-directional exchange of fluid between the inner shaft bore 240 and the outer shaft and the outer shaft bore 255. The valve is actuated by a motor 305, which controls the size of an orifice (not shown) in the valve 300. By changing the size of the orifice, the rate of fluid flow through the valve box 210, and thus the amount of damping provided by the suspension system 235 may be adjusted. The motor 305 is electrically connected to a motor controller 310 that provides electrical power to control the motor 305. As will be described in more detail below, the motor controller 310 is coupled to the bicycle control system through electrical and communications connections 212, 214.

During operation, as the bicycle 100 traverses over uneven terrain, the impact of the front tire on an obstacle, such as a depression for example, is transmitted through the suspension system 135. This impact force is detected by sensors 315, 320, which transmit a signal to the bicycle control system 190. In the exemplary embodiment, the sensor 315 is a an optical encoder such as that described in United States Patent No. 5,971,116 entitled "Electronic Suspension System for a Wheeled Vehicle" which is incorporated herein by reference in its entirety. The optical encoder 315 is mounted on the upper cylinder 200 and detects markings on an encoder strip 316 mounted to the shaft assembly 215. Based on the number of marks on the encoder strip 316 counted by the optical encoder 315 during a given time period, the main controller 190 can calculate the velocity and acceleration of the shaft due to the impact on tire 110. In the exemplary embodiment, the sensor 320 is a Hall effect sensor that detects the absolute position of the shaft assembly 215.

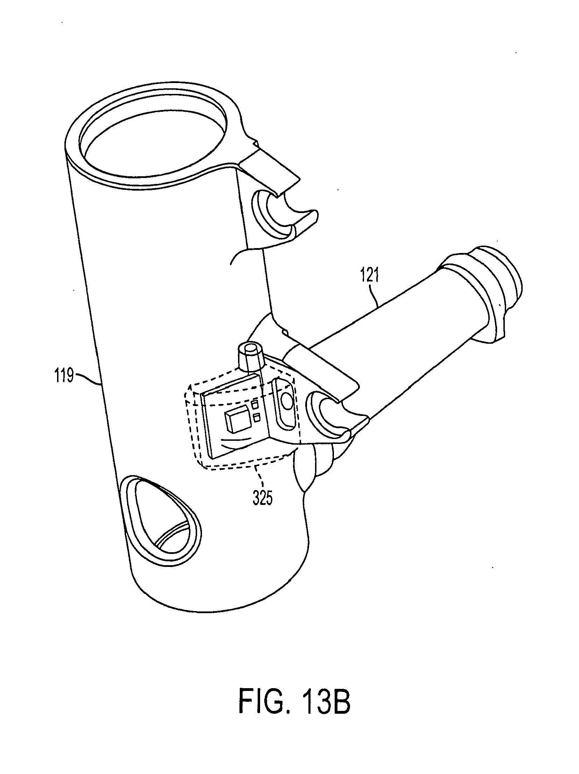

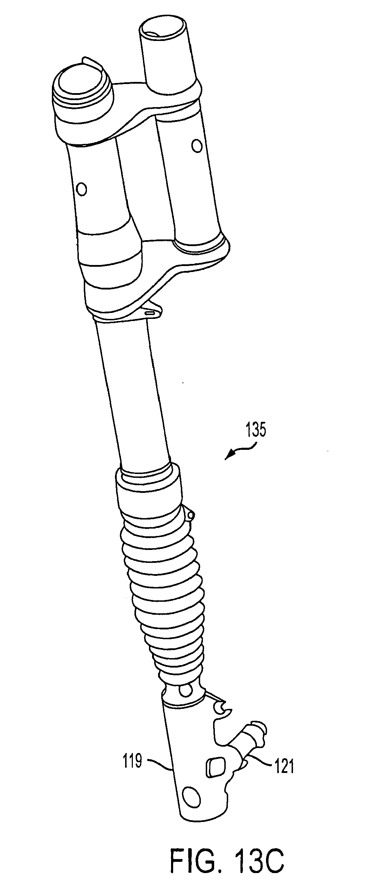

As will be discussed in more detail below with respect to the operation of the bicycle control system 190, the amount of damping provided by suspension system 135 will depend on the terrain, the rider's preferences and the rider's physical characteristics (for example, weight). Using these parameters, the control system 190 adjusts the orifice size of valve 300 to either allow more fluid flow (more damping) or less fluid flow (less damping). During typical riding conditions, a portion of the impact is damped by the tire 112 and rim 116. Typically, the tire 112 and rim 116 take between 9 milliseconds and 12 milliseconds to deform upon impact. This deformation damps the impact and extends the amount of time between impact and when the suspension system 135 starts to react. In the exemplary embodiment, an accelerometer 325 is mounted within the lower spindle 119 as shown in Figure 13B and FIGURE 13C. The spindle 119 includes a protrusion 121 that couples the suspension system 135 to the front wheel 110 through hub bearings (not shown). The accelerometer 325 measures the impact and transmits the acceleration information to the control system 190. In the exemplary embodiment, control system 190 receives the signal from accelerometer 325 and transmits the valve command to motor controller 310 in less than 12 milliseconds and preferably less than 11 milliseconds after the impact.

The suspension system 135 includes a viscous fluid, such as oil, that fills the upper chamber 270, lower chamber 275 and the bore holes 240, 255. When the tire 110 impacts an obstacle, the sensors 315, 320, 325 transmit a signal to the controller system 190 that calculates the desired amount a damping in accordance with a selected set of parameters. The control system 190 then converts the desired damping characteristic into an orifice size for the orifice of valve 300 and transmits a signal to motor controller 310 which adjusts the valve 300 in turn. During compression mode (initial damping in response to impact), the piston 260 moves down the lower cylinder 205 (that is, away from end plate 222) reducing the size of lower chamber 275. This compression of the fluid in lower chamber 275 results in fluid flowing through holes 285 in lower shaft 245, into bore 280 and subsequently into bore 240 in inner shaft 225. This fluid flow continues into the valve box 210, through first fluid path 290 and into the valve 300. Thus, the rate of fluid flow, and damping provided by suspension system 135 may be adjusted by the changing the size of the orifice in valve 300.

After exiting the valve 300, the fluid movement continues through second fluid path 295 and into outer shaft bore 255. The fluid flows within gap 258 and through holes 234 into the upper chamber 270. In the exemplary embodiment, simultaneously with the fluid flow through the shaft assembly 215 and valve box 210, an additional amount of fluid flows through the fixed orifice holes 264 in piston 260. The incorporation of orifices 264 provides a parallel path for fluid flow between the upper chamber 270 and the lower chamber 275. This parallel path provides additional flexibility by reducing the range of orifice sizes that valve 300 needs to achieve. It should be appreciated that the amount of travel in the suspension system is limited, as is the amount of energy that may be absorbed. As the amount of travel increases, the stiffness of suspension system decreases. However, certain impacts may require more fluid flow than the suspension system 135 can accommodate. Under these conditions the suspension system 135 may experience a phenomena known as "hydraulic lock". During hydraulic lock, the damping forces increase exponentially and the rider experiences what feels like a rigid fork. A secondary flow path relieves this pressure and avoids the hydraulic lock condition.

After the initial impact is damped, the suspension system 135 enters a rebound mode where the piston 260 moves up the lower cylinder 205 (that is, closer to end plate 222). The reversals of movement by the piston 260 also reverses the flow of fluid out of upper chamber 270, through the gap 258, valve box 210 and eventually back into the lower chamber 275 via inner shaft 225 and holes 285.

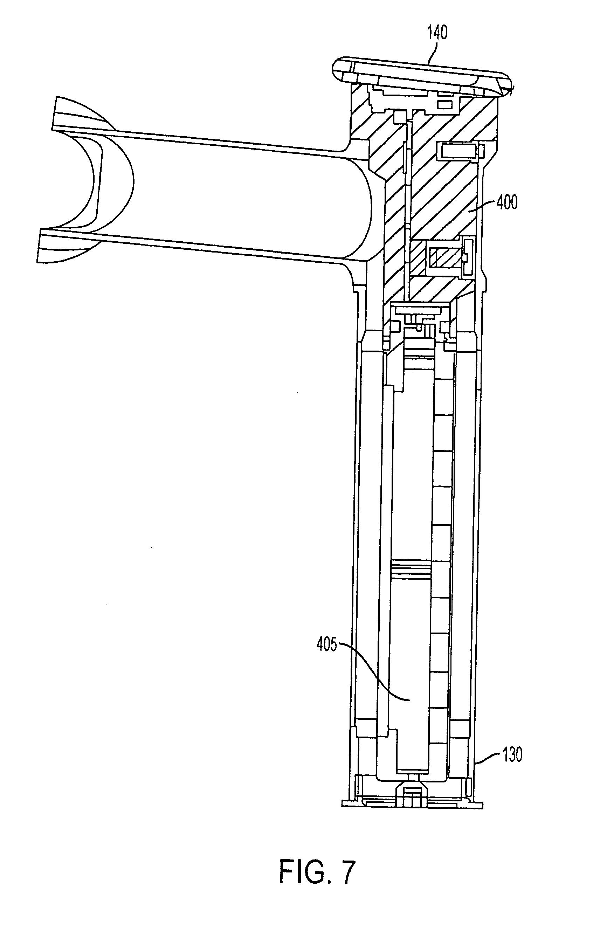

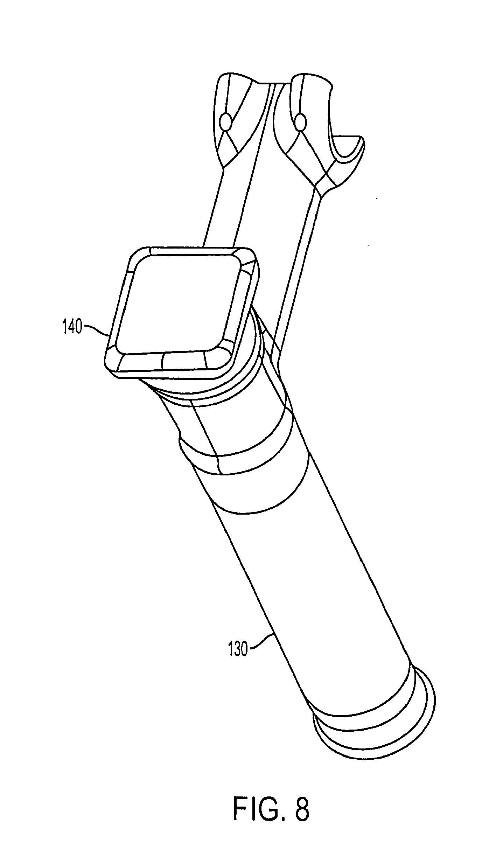

In the exemplary embodiment, the control system 190 includes a main controller 400 and battery 405 that are sized to fit in the head tube 130 as shown in Figures 7 - 9. In one embodiment, a display 140 is coupled to the main controller 400 and forms a cover over the head tube 130 to prevent water, dust and debris from coming into contact with the main controller 400 and battery 405. In the exemplary embodiment, the display 140 is a liquid crystal display (LCD) that is a 1.5" color display with resolution of 176x132 pixels. However, it will be appreciated that other display sizes and higher resolutions may be employed as desired. In an embodiment, the fonts displayed on the display 140 are sized to fit 17 columns of text by 16 rows, however, a different number of columns and rows may be employed depending on display size and resolution. As will be discussed in more detail below with respect to the graphical user interface, the display may also illustrate graphics to aid the rider in interacting with the control system both before, and during operation. Alternatively, the display 140 may also be, but is not limited to an organic light-emitting diode (OLED), a light emitting polymer, an organic electro-luminescence (OEL), or any other display suitable for the purposes disclosed herein.

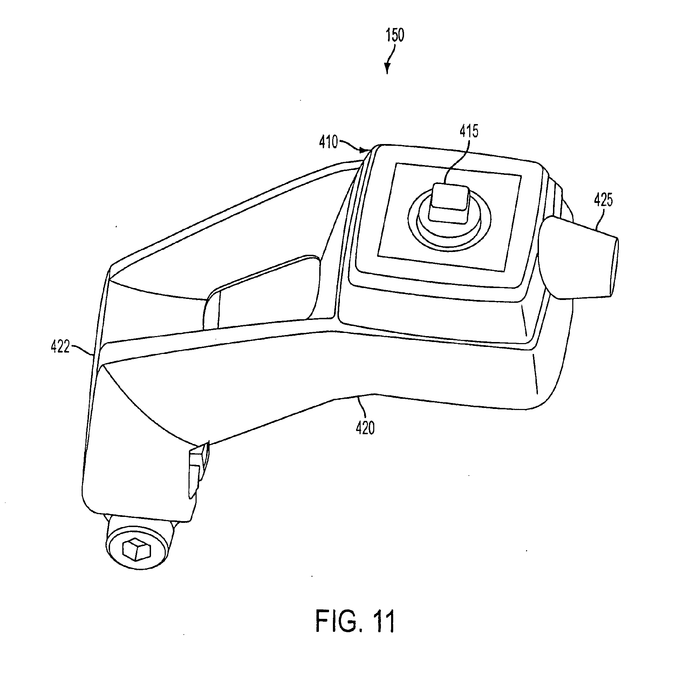

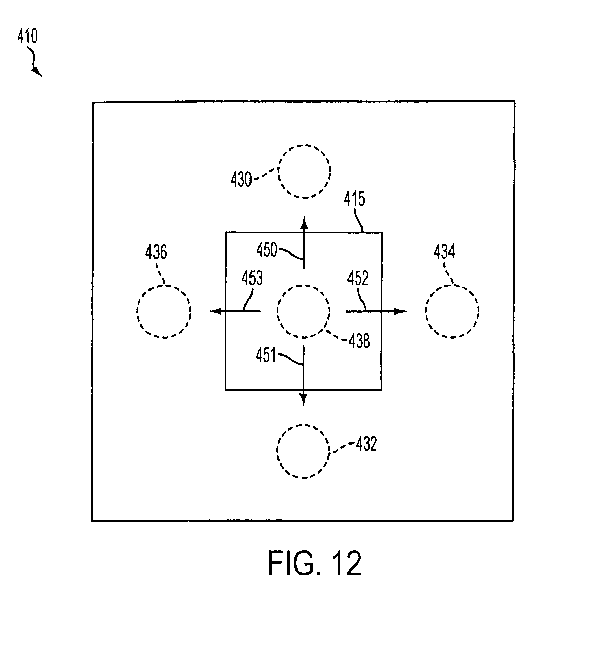

The controller 400 is electrically connected to a user interface 150 on the handle bar 145. Referring now to Figures 10 -11, in the exemplary embodiment, the user interface 150 is in the form of a lever interface 410. The lever interface 410 includes a lever 415 mounted to a frame 420. The frame 420 includes a clamp portion 422 that allows the lever interface 410 to be fixedly attached to the handlebar 145. A feed-through 425 in the side of frame 420 provides an entry point for a communication bus 640 that provides a pathway for signals between the main controller 400 and the user interface 150 as will be discussed in more detail below. In this embodiment, the lever 415 may be articulated in three axes and has five electrical contacts that may be actuated to provide a signal to the main controller 400. As shown in Figure 12, four of the contacts have actuation directions in the same plane, forward 430, backward 432, right 434, and left 436. The fifth or center contact 438 is arranged to be actuated in a direction perpendicular to the other contact actuation directions (for example, by pressing down). In one embodiment, the lever 415 is positioned adjacent to a handbrake 440 and gear selector 445 to allow the rider to manipulate the lever interface 410 with a thumb.

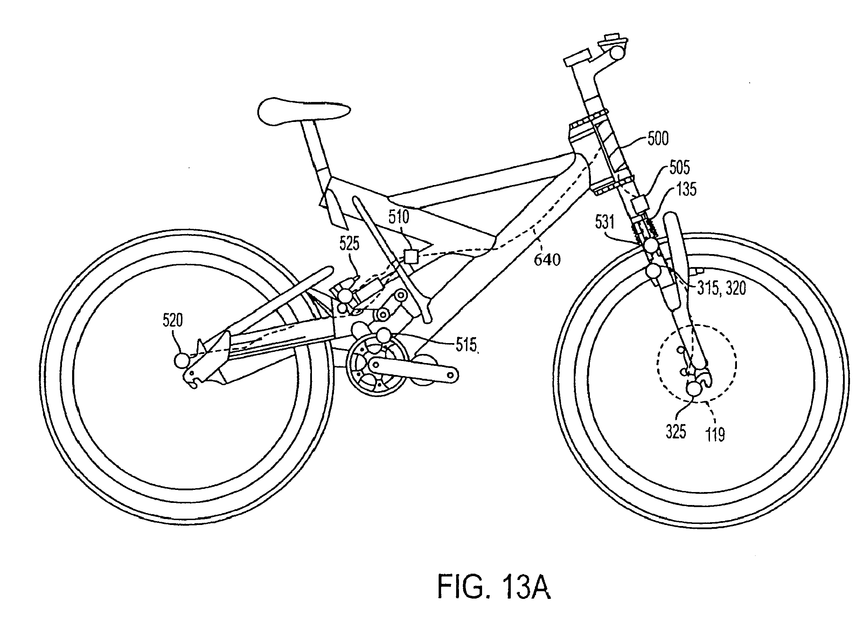

In another embodiment, the control system 190 is a distributed control system 500 as shown in Figure 13A. In this embodiment, a plurality of sensors, including optical encoder 315, Hall effect sensor 320, accelerometer 325, for example, are coupled to one or more microcontrollers 505, 510. The microcontrollers 505, 510, such as Model AT90USB646 manufactured by Atmel Corp. interface with the sensors 315, 320, 325 and control the flow of communications with the main controller 400. In this embodiment, the microcontrollers 505, 510 are arranged regionally on the bicycle 100 to minimize the number and length of wiring. For example, microcontroller 505 is position in or adjacent to the suspension system 135 and connected to the optical encoder 315, the Hall effect sensor 320 and the accelerometer 325. This allows the use of a single connector cable to the main controller 400 rather than three. In one embodiment, many if not all of the elements of the control system 190 are disposed within the tubing of the frame 105 of the bicycle 100 for both aesthetic and functional reasons.

Additional microcontrollers such as microcontroller 510 may be connected to additional sensors such as but not limited to crank speed sensors 515, gear selection sensor 520, rear suspension sensor 525, and wheel velocity sensor 531. This embodiment provides the advantage of minimizing the number of connectors needed on the main controller 400, allowing for a small and less expensive manufacturing cost. Additionally, the number of wires on the bicycle 100 is reduced, thereby alleviating manufacturing assembly issues and decreasing the number of feed through openings needed when wires enter and exit the frame 105. Additional advantages may take advantage of the processing capabilities of the microcontrollers 505. Certain processes, such as error checking or sensor calibration for example, may be executed by the microcontroller 505, 510 and off load these tasks from the main controller 400.

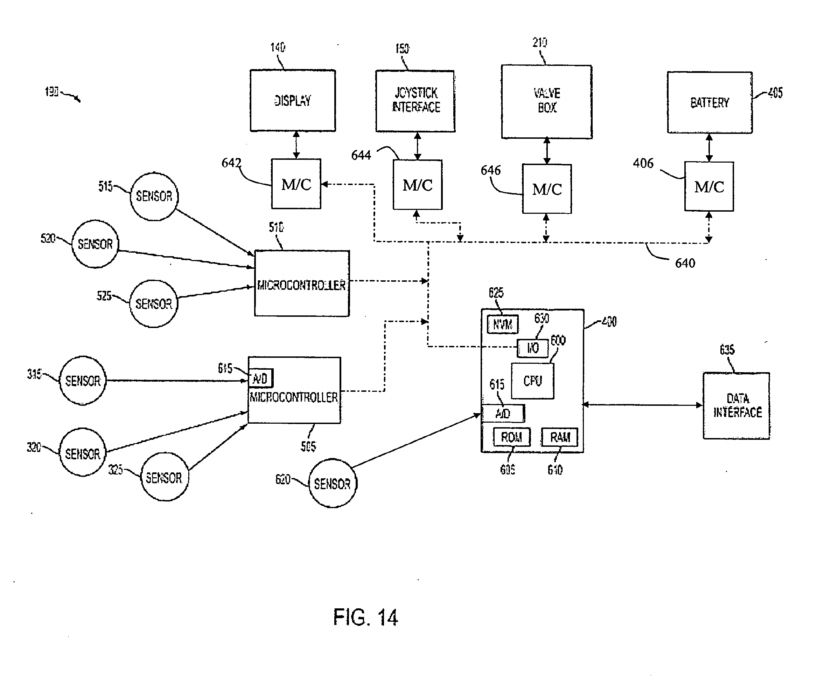

Another embodiment of the control system 190 is illustrated in Figure 14. The control system 190 includes a main controller 400. The main controller 400 is a suitable electronic device capable of accepting data and instructions, executing the instructions to process the data, and presenting the results. Main controller 400 may accept instructions through a user interface, or through other means such as but not limited to electronic data card, voice activation means, manually operable selection and control means, radiated wavelength and electronic or electrical transfer. Therefore, main controller 400 can be a microprocessor, microcomputer, a minicomputer, an optical computer, a board computer, a complex instruction set computer, an ASIC (application specific integrated circuit), a reduced instruction set computer, an analog computer, a digital computer, a molecular computer, a quantum computer, a cellular computer, a superconducting computer, a supercomputer, a solid-state computer, a single-board computer, a buffered computer, a computer network, a desktop computer, a laptop computer, a personal digital assistant (PDA) or a hybrid or combination of any of the foregoing.

Main controller 400 is capable of converting the analog voltage or current level provided by sensors, such as sensor 620 for example, into a digital signal indicative of the a measured bicycle operation characteristic. Alternatively, sensor 620 may be configured to provide a digital signal to main controller 400, or an analog-to-digital (A/D) converter 615 maybe coupled between sensor 620 and main controller 400 to convert the analog signal provided by sensor 620 into a digital signal for processing by main controller 400. Main controller 400 uses the digital signals act as input to various processes for controlling the control system 190. The digital signals represent one or more system 190 data including but not limited to acceleration on the front wheel 110, position of the front suspension 135, the crank speed 515 and the like.

Main controller 400 is operably coupled with one or more functional components of system 190 by a communications medium or communications bus 640. Communications bus 640 includes, but is not limited to, solid-core wiring, twisted pair wiring, coaxial cable, and fiber optic cable. Communications bus 640 also includes, but is not limited to, wireless (such as the IEEE 802.15.4 protocol for example), radio and infrared signal transmission systems. The communications bus 640 couples main controller 400 to microcontrollers 505, 510 and sensors 315, 320, 325, 515, 520, 525. The communications bus 640 also couples the main controller 400 to microcontrollers 406, 642, 644, 646 as will be discussed in more detail below. Main controller 400 is configured to provide operating signals to these components and to receive data from these components via communications bus 640. Main controller 400 communicates over the communications bus 640 using a well- known computer communications protocol such as Inter-Integrated Circuit (I2C), Serial Peripheral Interface (SPI), System Management Bus (SMBus), Transmission Control Protocol/Internet Protocol (TCP/IP), RS-232, CanBus, SM Bus ModBus, or any other communications protocol suitable for the purposes disclosed herein.

In one embodiment, the control system 190 has a single common communications bus 640 that provides communications functionality between the functional components and the main controller 400. The use of microcontrollers 642, 644, 646, 406 allows for a single common communications bus 640. Without the microcontrollers 642, 644, 646, 406 and the single common communications bus 640, individual cables and connectors would be needed for each functional component. In the case of the exemplary user interface device, six cables and a large connector (e.g. 10 - 15 millimeter) on the user interface device would be needed. Further, the connector on the main controller would typically need 18 pins, resulting in an approximately 38 millimeters connector to accommodate wiring for each of the functional components. In contrast, the exemplary single common communications bus 640 is a two-cable arrangement that uses small connectors, such as 5.5 - 6 millimeter in size for example. It should be appreciated that the single communications bus provides advantages in eliminating cables/wiring, reducing connector size and weight, and also reducing costs

In general, main controller 400 accepts data from sensors, such as accelerometer sensor 325 for example, and the microcontrollers 406, 642, 644, 646 associated with the functional components 140, 150, 210, 405 for example. Main controller 400 is also given certain instructions from an executable instruction set for the purpose of comparing the data from sensor 325 or microcontrollers 406, 642, 644, 646 to predetermined operational parameters such as a damping curve or a user interface position. Main controller 400 provides operating signals to microcontrollers 406, 642, 644, 646. For example, the main controller 400 may send an operating signal to microcontroller 646, which in turn provides a signal to motor control 310 that operates valve 300. In the exemplary embodiment, each of the microcontrollers 406, 505, 510, 642, 644, 646 have an identifiable address, such that the signals transmitted by the main controller 400 include an address data portion and an operating command data potion. In response to sensing a signal on the communications bus 640, the microcontrollers receive the signal and interrogate the data to determine if the address data portion matches the respective microcontrollers address. If the addresses match, the microcontroller responds as indicated below. If the addresses do not match, the microcontroller ignores the signal.

Main controller 400 also accepts data from microcontroller 646, indicating, for example, whether the motor 305 or valve 300 is operating correctly. The main controller 400 compares the operational parameters to predetermined variances (for example, motor current, valve position) and if the predetermined variance is exceeded, generates a signal that may be transmitted to the microcontroller 642. The microcontroller 642 translates the signal into a compatible signal for operation of the display 140. In this way, the rider is notified of an alarm or message on display 140. Additionally, the signal may initiate other control methods that adapt the operation of the control system 190 such as initiating the microcontroller 646 to change the operational state of valve 300 to compensate for the out of variance operating parameter.

Main controller 400 includes a processor 600 coupled to a random access memory (RAM) device 610, a non-volatile memory (NVM) device 625, a read-only memory (ROM) device 605, one or more input/output (I/O) controllers 630, and a data interface device 635.

I/O controllers 630 are coupled to the communications bus 640 to provide signals between the main controller 400 and the functional components. I/O controllers 258 may also be coupled to one or more analog-to-digital (A/D) converters 615, which receive analog data signals from sensors.

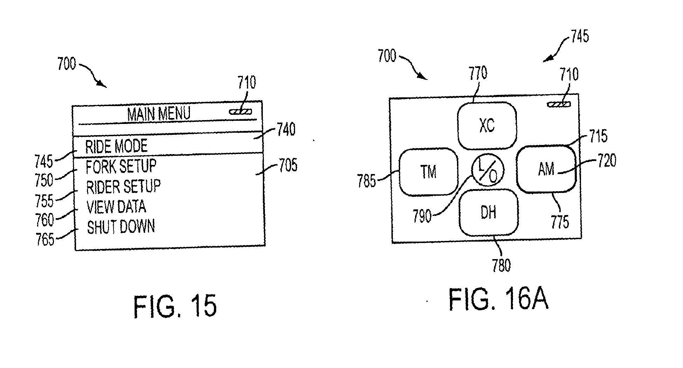

Data interface device 635 provides for communication between main controller 400 and an external device, such as a computer, a laptop or a computer network for example, in a data communications protocol, such as but not limited to USB (universal serial bus) or JTAG (joint test action group) for example, supported by the external device. ROM device 605 stores an application code, e.g., main functionality firmware, including initializing parameters, and boot code, for processor 600. Application code also includes program instructions as shown in Figures 15 -24 for causing processor 600 to execute any operation control methods, including starting and stopping operation, changing operational states of the functional components 140, 150, 210, 405, monitoring predetermined operating parameters such as measurements by sensors 315, 320, 325, and generation of display messages for example.

NVM device 625 is any form of non-volatile memory such as an EPROM (Erasable Programmable Read Only Memory) chip, a flash memory chip, a disk drive, or the like. Stored in NVM device 625 are various operational parameters for the application code. The various operational parameters can be input to NVM device 625 either locally, using user interface 150 or remotely via the data interface 635. It will be recognized that application code can be stored in NVM device 625 rather than ROM device 605.

The battery 405 includes the microcontroller 406 that controls the flow of electrical power through one or more cables 408 to main controller 400 for operating the control system 190 as described above in reference to Figure 9. The microcontroller 406 also provides battery management functionality independent of the main controller 400. Such battery management functions include monitoring cell loading and cell voltages to avoid overloading individual cells. Battery management functions may also include monitoring parameters for undesirable conditions such as a cell operating temperature over a desire threshold, and the taking of appropriate remedial measures. In the exemplary embodiment, the microcontroller 406 is arranged to receive an address byte signal from the main controller 400 via the communications bus 640. In response, the microcontroller 406 transmits data, such as battery identification (e.g. serial number, date of manufacture), and battery parameters such as battery temperature, cell voltages, battery cycling information (e.g. number of cycles, depth of cycles), and remaining electrical power capacity for example, to the main controller 400.

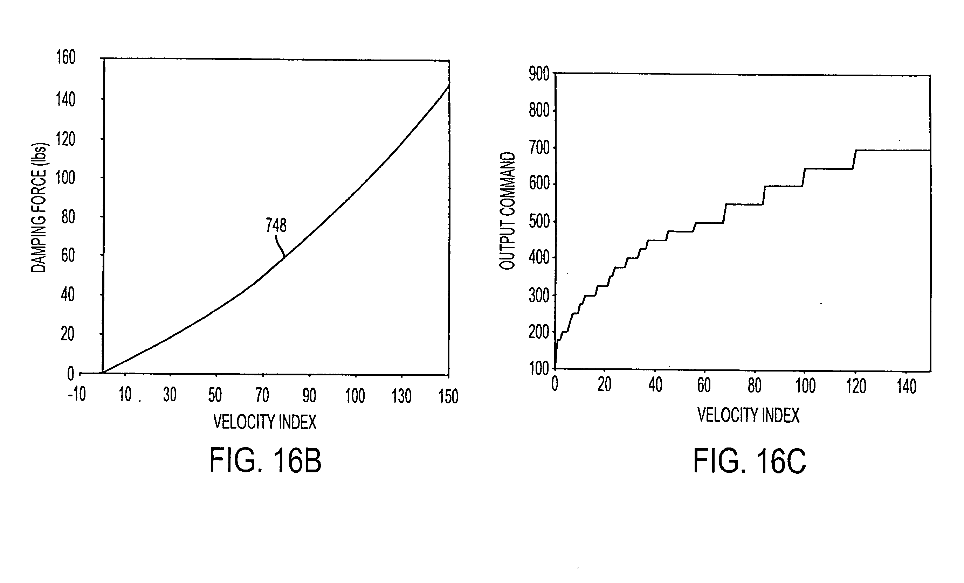

The valve box 210 includes the microcontroller 646 that receives and transmits signals over the communications bus 640 with the main controller 400 for operating components of the valve box 210, such as motor control 310. The microcontroller 646 translates signals from the main controller into functional operating signals that are used by the motor control 310 to drive the motor 305. This operation of the motor 305 changes the operating position of valve 300 to achieve the desired riding performance by bicycle 100. In the exemplary embodiment, the microcontroller 646 includes control feedback loops and nested feedback loops that accept input signals, such as from the main controller 400, accelerometer 325, or motor position from the motor control 310 for example, and transmit signals to the motor control 310 to change the position of valve 300 to achieve the desired performance. In one embodiment, the microcontroller 646 receives a signal from the main controller 400 indicating the type of performance desired (e.g. downhill), and the microcontroller 646 uses signals from the accelerometer 325 and uses a command curve (Figure 16C) to determine the appropriate valve position.

The user interface 150 includes the microcontroller 644 that receives and transmits signals over the communications bus 640 with the main controller 400. In the exemplary embodiment, the microcontroller 644 is arranged to receive an address byte signal from the main controller 400 via the communications bus 640. In response, the microcontroller 644 provides a return signal indicating the position of the user interface 150. For example, in the embodiment where the user interface 150 is in the form of a lever interface 410, the microcontroller 644 will return a signal that indicates to the main controller 400 which of the contracts 430, 432, 434, 436 were actuated. In one embodiment, the microcontroller translates the signals received from the user interface 150, such as contact actuation voltages for example, into data indicating the user interface position, such as forward, backward, right and left for example. This translated data is transmitted via the communications bus 640 to the main controller 400.

The display 140 functional component includes the microcontroller 642 that receives signals over the communications bus 640 from the main controller 400. In one embodiment, the microcontroller 642, including the LED driver circuit, is mounted to the contact edge of an LCD glass in the display 140, sometimes referred to as "chip on glass." The microcontroller 642 receives a signal from the main controller 400 and translates the data received from the main controller 400 into signals that cause the display 140 to illuminate the desired image. The display 140 includes a matrix of pixels that need to be individually actuated to generate a desired image. In response to receiving a signal containing data with a desired image, the microcontroller 642 translates the image data and calculates which pixels in the matrix of pixels need to be actuated. The microcontroller then translates the image data into voltages that are applied to the pixels and causing the image to appear on the display.

In some embodiments, the display 140 and user interface 50 may be combined into a single integrated device, such as a touch-screen display. In this embodiment, the integrated display/user interface (not shown) would include a microcontroller that provides the combined functionalities of microcontrollers 642, 644.

Main controller 400 includes operation control methods embodied in application code shown in Figures 15-24. These methods are embodied in computer instructions written to be executed by processor 600, typically in the form of software. The software can be encoded in any language, including, but not limited to, machine language, assembly language, VHDL (Verilog Hardware Description Language), VHSIC HDL (Very High Speed IC Hardware Description Language), Fortran (formula translation), C, C++, Visual C++, Java, ALGOL (algorithmic language), BASIC (beginners all-purpose symbolic instruction code), visual BASIC, ActiveX, HTML (HyperText Markup Language), and any combination or derivative of at least one of the foregoing. Additionally, an operator can use an existing software application such as a spreadsheet or database and correlate various cells with the variables enumerated in the algorithms. Furthermore, the software can be independent of other software or dependent upon other software, such as in the form of integrated software.

It should be appreciated that the microcontrollers 406, 505, 510, 642, 644, 646 may also include circuit containing components similar to the main controller 400 such as a processor, a random a access memory (RAM) device, a non-volatile memory (NVM) device, a read-only memory (ROM) device, one or more input/output (I/O) controllers. Each microcontroller 406, 505, 510, 642, 644, 646 also includes operation control methods embodied in application code. These methods are embodied in computer instructions written to be executed by a processor, typically in the form of software.

Referring now to Figures 15 -24, the graphical user interface 700 (GUI) generated by processor 600 and displayed on display 140 is shown. The GUI 700 generally has one of four modes of display. In a first mode, the GUI 700 may be a main menu selection entry 705 as shown in Figure 15. The second mode is a "ride mode", such as that shown in Figure 16A. In ride mode, the GUI uses a combination of graphical 715 and textual 720 elements to assist the rider in quickly interacting with the control system 190 during operation.

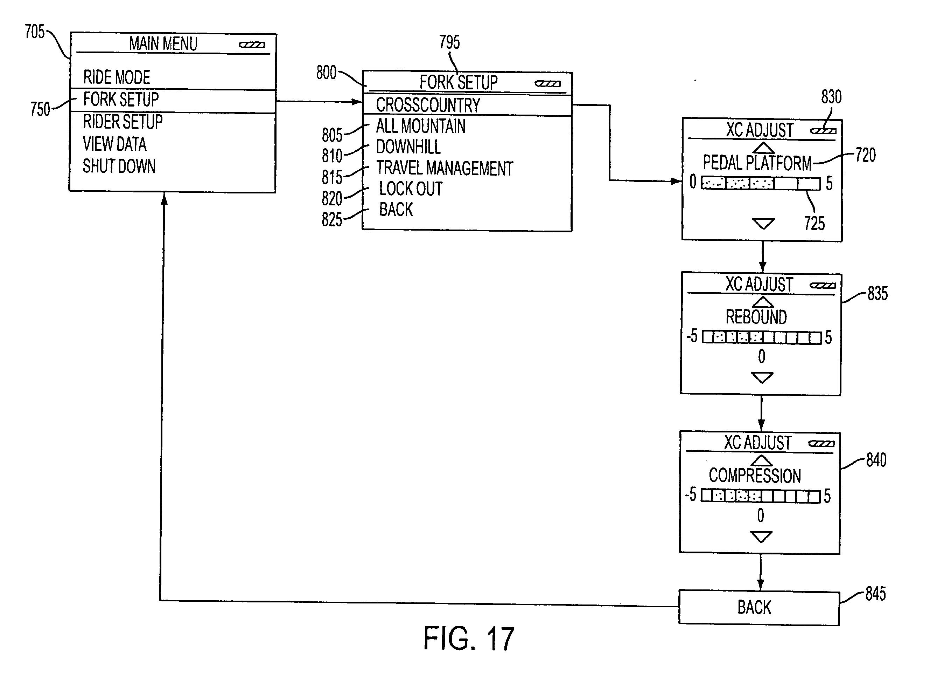

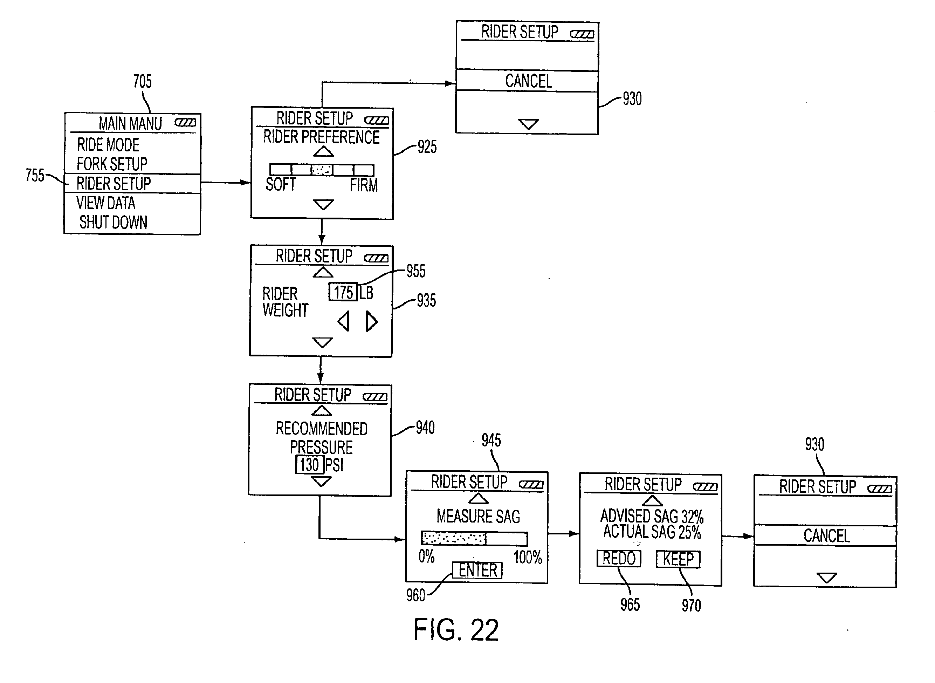

The third mode of display illustrated in Figures 17 - 22 is also a combination of a graphical element, such as indicator bar 725 for example, and a textual element. The third mode of display allows the rider to change operating characteristics for various components, such as suspension system 135. The fourth mode of display, illustrated in Figure 22 displays a graphical representation 730, such as a histogram for example, of data collected by the control system 190 during operation. During each of the modes of operation, a battery indicator 710 is displayed in the corner of the display.

When the control system 190 is activated, by toggling the user interface 150 for example, the main controller 400 transmits a signal to the microcontroller 642 causing the GUI 700 to display the main menu selection 705. In this display, the rider uses the user interface 150 to indicate a desired movement of the indicator 740. The microcontroller 644 transmits a signal to the main controller 400, which in turn transmits a signal to microcontroller 642 indicating that the display should be changed to correspond with the riders input on user interface 150. This results in the indicator 740 moving between the various menu selections on display 140. While the description herein refers to the display 150 changing into response to the rider actuating user interface 150, it should be appreciated that in the exemplary embodiment, these steps are accomplished via communications on the communications bus 640 between the main controller 400 and the microcontrollers 642, 644 as described herein.

In the exemplary embodiment, the indicator is a different color from the background of GUI 700 and the textual menu entry selections "Ride Mode" 745, "Fork Setup" 750, "Rider Setup" 755, "View Data" 760, and "Shut Down" 765 to highlight the selected menu entry. To select a particular menu item, the rider uses the interface 150 by pushing the lever 415 in the direction indicated by arrows 450, 451, 452, 453 into contact with one of the contacts 430, 432, 434, 436, 438. For example, in the main menu 705, if the lever is pushed in the direction of arrow 451 and into contact with backward contact 432, the indicator 740 would move from "ride mode" 745 to "fork setup" 750. To select, a menu entry, the rider presses down on the lever 415 to contact the center contact 438. Once the center contact 438 is actuated, a signal is transmitted by the lever interface 410 via the control system 190 that changes the GUI 700 to reflect the rider's selection.

The first selection on main menu 705 is labeled "ride mode" 745. Selection of ride mode 745 results in the GUI 700 changing display 140 to that illustrated in Figure 16A. Ride mode GUI 745 includes both graphical elements 715 that are displayed to look similar to a button, and textual elements 720 that provide a visual feedback as to the rider indicating what feature the selection will activate. In the exemplary embodiment, the ride mode GUI 745 will change the operating characteristics of the bicycle 100 and the suspension system 135 in particular. In certain types of bicycling, such as mountain biking for example, the rider may encounter different types of terrain either within the same outing, or on different outings. Since it would be inconvenient to have multiple bicycles to manage different terrains, it would be advantageous to have the control system 190 adapt the operation of the bicycle for different types of terrains.

In the exemplary embodiment illustrated in Figure 16A, the ride mode GUI 745 has five selections, "XC" 770 (cross country), "AM" 775 (all mountain), "DH" 780 (down hill), "TM" 785 (travel management) and "L/O" 790 (lockout). Each of these selections will change the operating characteristics of the suspension system 135 by changing the damping curve used by the control system 190 to provide a damping performance that is desirable for the expected terrain. An exemplary damping curve 748 is illustrated in Figure 16B. The damping curves are used by the control system 190 to determine what orifice size is required for valve 300 during conditions executed during operation. For example, by using the damping curve 748, the damping force for a particular velocity is known. From this, a signal indicating to the desired damping curve is transmitted from the main controller 400 to the microcontroller 646, which translates the signal and controls the size of valve 400 using the command curve, such as that illustrated in Figure 16C and feedback from a sensor, such as the accelerometer 325 for example. It should be appreciated that in the exemplary embodiment, the ride mode selections 770, 775, 780, 785, 790 are arranged on the display 140 in the same location as the contacts 430, 432, 434, 436, 438 relative to the lever 415 on the lever interface 410. This provides an advantage in that the rider does not have to look at the display 140 to confirm their mode of operation, but may simply move the lever 415 to the desired mode. Thus the rider can avoid having to take their eyes off the trail.

It should be appreciated that while the user interface 150 is illustrated and described as being on the right side of the handle bar 145, it may be mounted on either side as desired by the rider. In an embodiment where the user interface 150 may be mounted on either side, the setup process may include a selection for indicating which side of the handle bar 145 the joystick 410 is located. When the user interface 150 is relocated, the contacts 430, 432, 434, 436 are changed to correspond to the graphical user interface 700. For example, when the joystick 410 is on the left hand side, contact 430 is considered "up," and used as such (menu selection, and XC selection during ride mode). When the joystick 410 is on the right side of the handle bar 145, 430 is now considered "down." In menu selections, 430 will be used to move the highlighter/indicator down. It will also be used to select DH during ride mode.

The XC 770 selection refers to cross-country style of bicycle riding which is the most common form of mountain biking. This type of terrain generally involves riding point-to-point or in a loop including climbs and descents on a variety of terrain.

The AM 775 selection refers to an all-mountain style of terrain which is a general purpose setting to handle almost everything a rider will encounter on a day of riding. Typically, the all mountain setting has about 4 to 6 inches of travel in the suspension system 135. The AM 775 damping curve is intended to allow the ride to climb hills efficiently while allowing more damping to absorb larger impacts than the XC 770

The DH 780 selection refers to a form of riding that consists mostly of riding down steep inclines. The DH 780 damping curve provides for a smaller amount of damping from the suspension system 135 allowing the suspension to be freer to move, sometimes referred to as "plush". This allows the suspension system 135 to provide additional stability for the rider when encountering multiple fast impacts. The one exception to this is when the rider encounters a large impact, whereupon the damping is increased proportionally with the position of the fork to prevent the suspension system from bottoming out. Typically, the downhill setting has about 7 to 10 inches of travel in the suspension 135.

The TM 785 selection allows the rider to change the amount of travel of the piston 260 allowed in the suspension system 135 The L/O 790 setting "locks-out" the suspension system 135 so only minimal suspension travel is used and the damping is effectively reduced to zero. The L/O 790 mode is desirable when the rider encounters smooth terrain, such as a paved street or hard packed dirt for example.

If the rider selects "FORK SETUP" 750 from the main menu 705, the rider is presented with the series of GUI menu displays illustrated in Figure 17. The fork setup 750 selection allows the rider to change parameters associated with each of the ride modes 745 to meet their desired performance. The first screen displayed is a menu selection 795 that displays each of the ride mode options. In the exemplary embodiment, the menu selections include "CROSSCOUNTRY" 800, "ALL MOUNTAIN" 805, "DOWNHILL" 810, "TRAVEL MANAGEMENT" 815, "LOCK OUT" 820, and "BACK" 825. Similar to above, the rider used the user interface lever 415 to navigate to the desired selection and made a selection by actuating the center contact 438.

In the embodiment illustrated in Figure 17, the crosscountry 800 menu entry is selected. This results in a series of menu displays 830, 835, 840 being presented to the rider in turn. Each of the displays 830, 835, 840 provides the rider the opportunity to adjust the setting of a parameter associated with the selected ride mode. The first display 830 allows the rider to change the "PEDAL PLATFORM" parameter. Pedal platform refers to the amount of stiffness in the suspension system that results in "pedal bobbing" which is the amount of efficiency loss during pedaling due to the suspension compression and rebounding that results from the rider's pedaling force. An indicator bar 725 graphically shows the rider the current setting. To change the parameter setting, the rider uses the user interface lever 415 and actuates the right contact 434 to increase the setting or left contact 436 to decrease the setting. In the exemplary embodiment, the setting may be changed from a level of 0 to 5. Once the desired setting is achieved, the rider actuates the contact 432 to change to the next display.

The next display under the cross-country selection 800 is the rebound display 835. Similar to above, the rider changes the parameter setting, -5 to 5 for example, and actuates the contact 432. The rebound parameter adjusts the amount of damping provided by the suspension system 135 during the rebound stroke of the suspension. After adjusting the rebound setting, the display changes to a compression display 840. Similar to above, the rider changes the setting, -5 to 5 for example, and actuates the contact 432. If the rider needs to go back to previous setting, this is accomplished by actuating the forward contact 430. The last display in the "BACK" display 845, which when selected returns the rider to main menu 705.

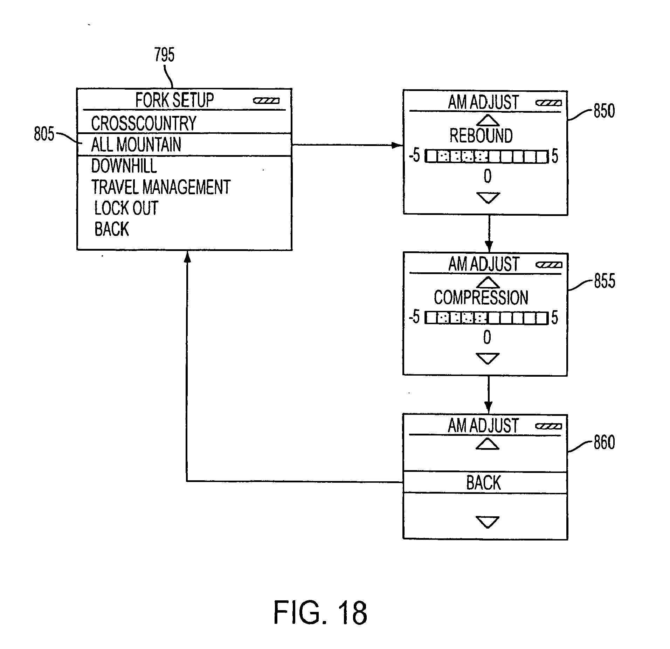

If the rider had selected all mountain menu entry 805 from the fork setup menu selection 795, the rider is presented with three displays, rebound display 850, compression display 855 and back display 860 as shown in Figure 18. The rider adjusts these parameters and navigates through the displays in the same manner as described above.

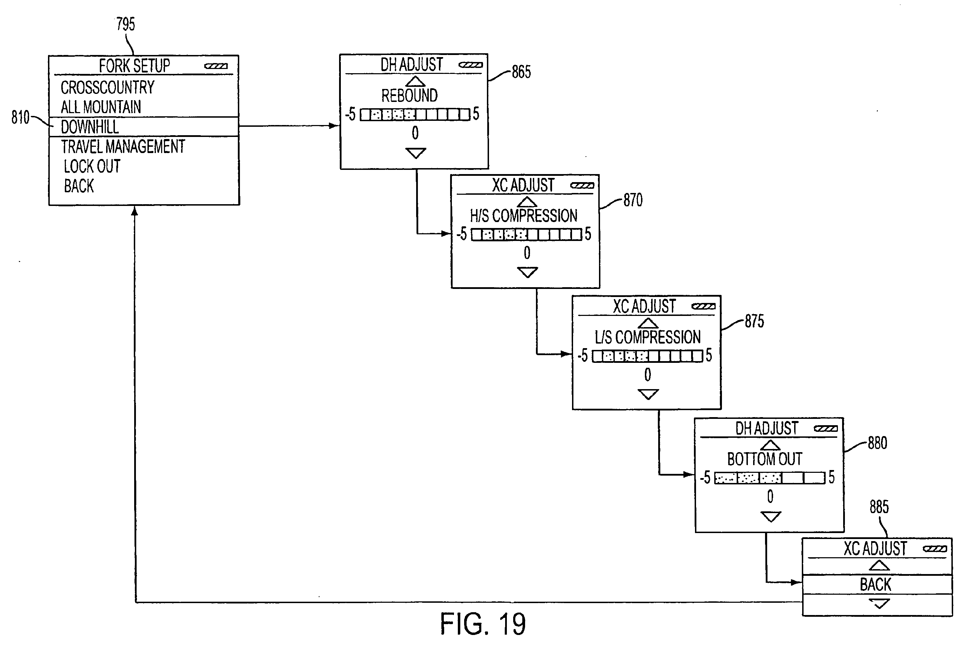

The selection of the downhill menu entry 810 from the fork setup menu selection 795 results in the presentation of five menu displays as shown in Figure 19, rebound display 865, high-speed compression display 870, low-speed compression display 875, bottom out display 880, and back display 885. The rider adjusts these parameters and navigates through the displays in the same manner as described above.

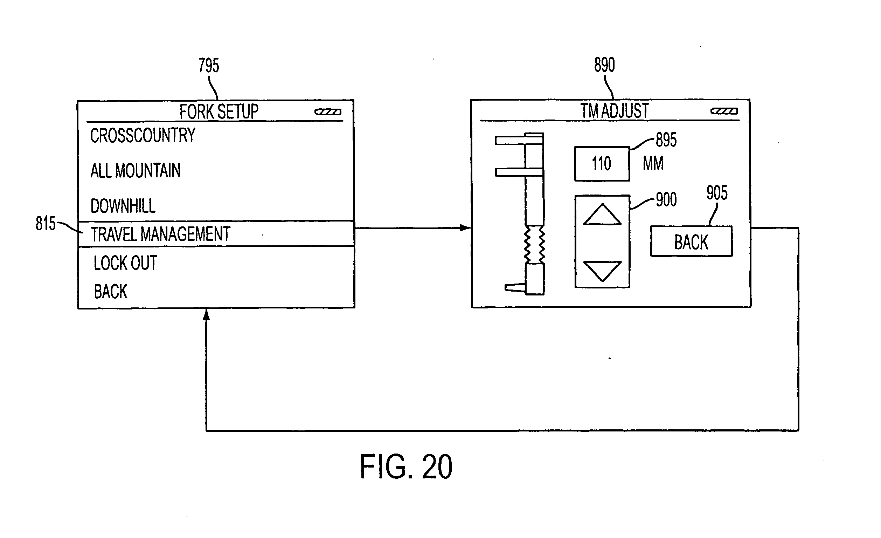

If the rider chose the travel management menu entry 815 from the fork setup menu selection 795, the TM Adjust display 890 is presented as shown in Figure 20. The TM Adjust display 890 displays the current amount of travel in a text box 895. The rider actuates the forward 430 and backward 432 contacts with the lever 415 to change the amount of travel in the suspension system 135. A graphical indicator 900 provides a visual indication to the rider on how to increase and decrease the travel parameter. The back indicator 905 is selected by actuating the right contact 434. Upon selection of the back indicator 905, the rider is returned to the fork setup menu 795.

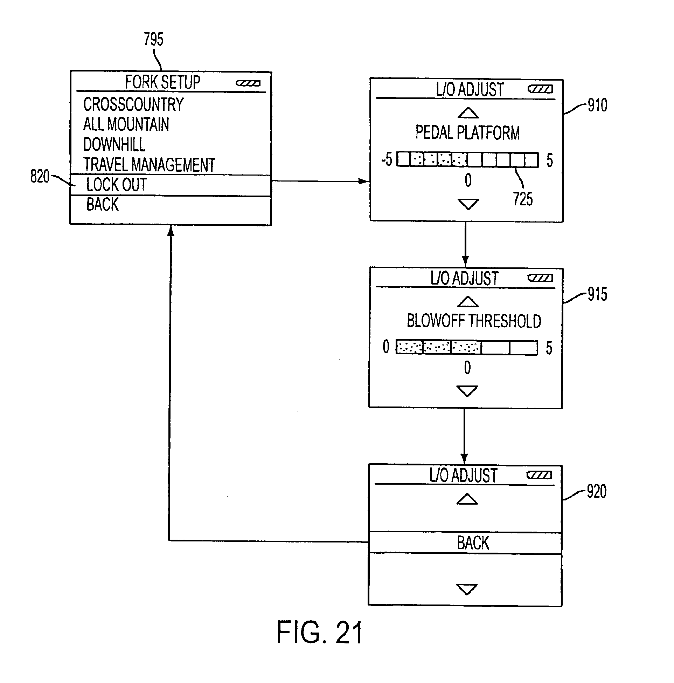

Selection of the lock out menu entry 820 from fork setup menu selection 795 results in the presentation of three displays, pedal platform display 910, blowoff threshold 915, and back display 920 as shown in Figure 21. The rider adjusts these parameters and navigates through the displays in the same manner as described above. The blowoff threshold 915 allows the rider to change the impact threshold level where the lockout mechanism disengages. Then operating in lockout mode 790, the suspension system 190 provides very little damping. The blowoff threshold provides for a level of impact whereupon the suspension system re-engages to provide damping in the event the rider experiences an unexpected obstacle (such as a pothole for example).

Referring to Figure 22, the rider may further adjust the operation of the bicycle 100 by entering personal characteristics and preferences through the selection of menu entry 755 from the main menu 705. This results in the display of rider preference display 925. In this display 925, the rider may change a firmness parameter along a progressive scale to reflect their personal preference for a suspension. If the rider softens the suspension by moving the indicator to the left, less damping will be achieved. If the rider moves the indicator to the right towards the "FIRM" text, the suspension system 135 will provide more damping. The movement of the parameter in the rider preference display 925 alters the default damping curve for any of the modes of operation by shifting the curve to provide more or less damping. If the rider only wants a change in the firmness parameter, the rider setup routine may be exited by actuating the forward contact 430 that then enters display 930 and an exit to the main menu 705.

From the rider preference display 925, if the rider actuates the contact 432, the display changes to rider weight display 935. By actuating the right 434 and left 436 contacts with the user interface lever 415, the rider can select and enter their body weight. The selected weight is displayed in text box 955. Once the riders weight is entered and the rider actuates the contact 432, the processor 600 executes instructions to calculate the recommended pressure in air piston 220. The rider may then adjust the air pressure in air piston 200, either decreasing or using a hand pump to increase to the desired pressure.

Upon actuating the contact 432, the processor 600 executes further instructions to measure the actual sag or deflection in the suspension system 135, through signals from optical encoder sensor 315 for example, due to the rider's weight. This static deflection or "sag" is displayed in terms of percentage on display 945. Once the enter button 960 is selected by the rider, the processor 600 executes instructions to determine the predicted amount of sag that would be expected if the rider entered the proper air pressure in the air piston 220. The advised sag and actual sag are presented to the rider in display 950. This display 950 provides the rider with the option of re-executing the rider setup process by selecting button 965 or if the rider finds the settings acceptable, selecting the keep button 970. After exiting the display 950, the rider enters display 930 that allows an exit to main menu 705.

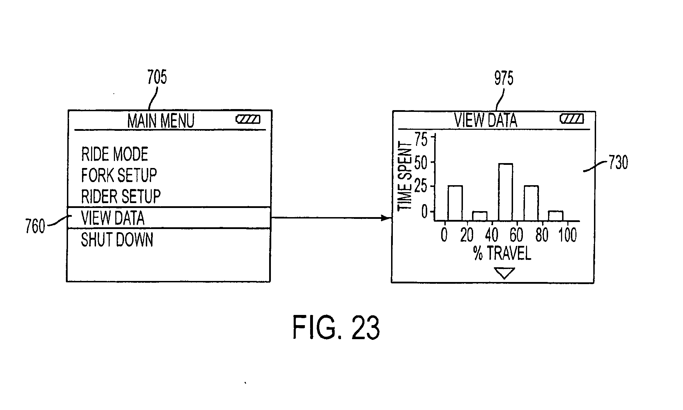

The rider may also choose to review data collected by control system 190 by selecting menu entry 760 from the main menu 705 as shown in Figure 23. Upon selection of menu entry 760, the display changes to view data display 975 that presents a graph of parameters collected and stored by the control system 190. In the exemplary embodiment, the graph is a histogram 980 that represents the amount of time spent at various levels of travel in suspension system 135. The rider to determine if the suspension system 135 needs to be made firmer or softer to improve performance, for example, may use the histogram 980 to aid their analysis.

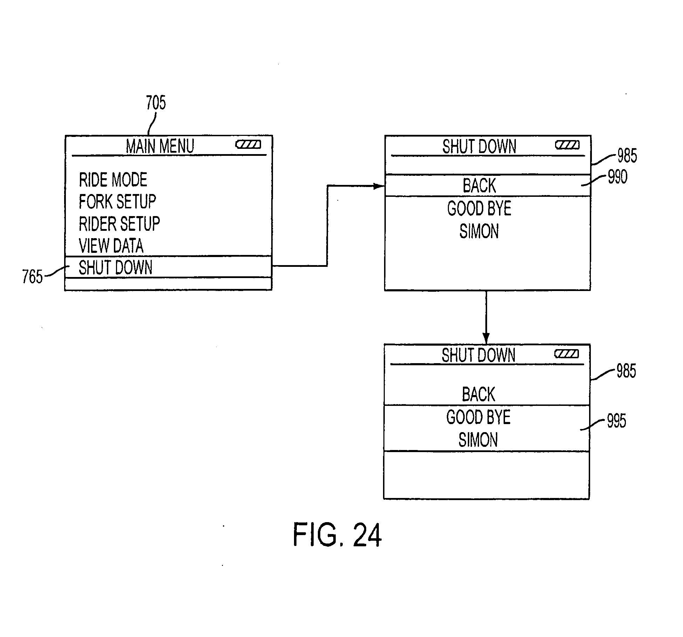

Once the rider has completed their activities, it is desirable to shut down the control system 190 to prevent unnecessary drain on the battery 405. By selecting the shut down menu entry 765 the shut down display 985 is displayed as shown in Figure 24. This display 985 has two menu entries, back entry 990 and goodbye entry 995. If the rider selects the back entry 990, because the rider accidentally entered display 985 for example, the display reverts back to main menu 705. If the rider selects the "Good bye" menu entry 995, the control system initiates a shut down routine.

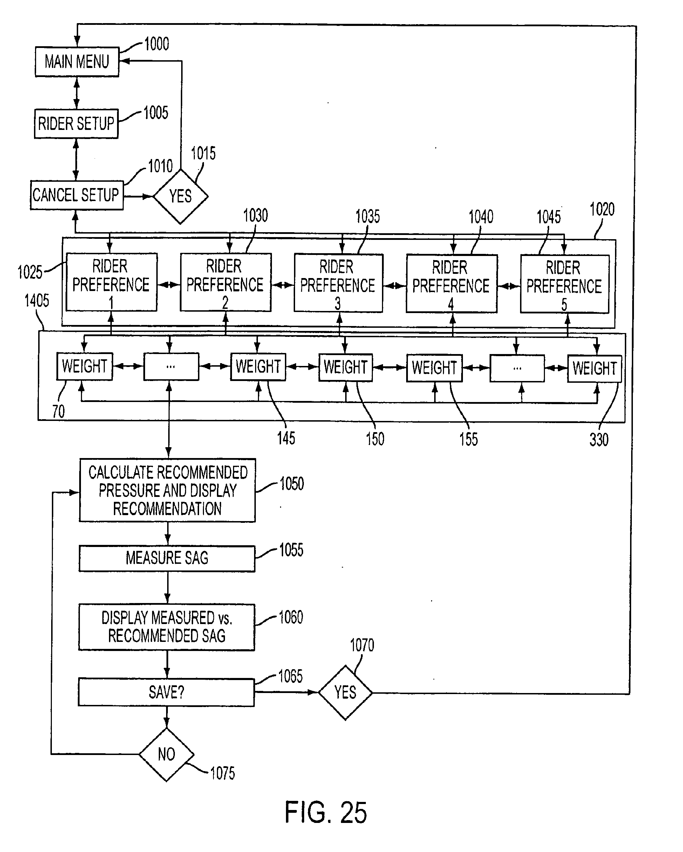

A block flow diagram of the rider setup is illustrated in Figure 25. From the main menu block 1000, the processor executes instructions when the rider enters the rider setup 1005, by selecting menu entry 755 from the main menu 705 for example. The rider is given the option of canceling the setup in block 1010 and if an affirmative response is received in block 1015, the routine loops back to the main menu 1000. If a negative response is received, the routine continues to block 1020 where the rider stiffness preference is selected, via display 925 for example. Each preference setting 1025, 1030, 1035, 1040, 1045 has a different set of associated damping characteristics that changes the operation of the suspension system 135. The parameter setting selected in block 1020 is stored by the control system 190 in nonvolatile memory device 625 before proceeding to block 1045 where the rider enters their weight, via display 935 for example. The selected weight value entered by the rider is stored in nonvolatile memory device 925 and the routine proceeds to block 1050.

In block 1050, the recommended air pressure is calculated. In the exemplary embodiment, the recommended air pressure is determined using a lookup table that is a function of the rider preference selection and the rider's weight. The routine then displays the recommended air pressure and waits for the rider to acknowledge that the pressure change has occurred before proceeding to block 1055 where the actual amount of static sag due to the rider's weight is measured.

The measured sag and recommended sag are displayed for the rider to review in block 1060. If the rider finds the actual sag to be acceptable, the routine returns to the main menu 1000 via block 1070. If the rider is unsatisfied with the actual amount of sag, the routine loops back to block 1050 via block 1075 to reexecute the process. It should be appreciated that the rider may change different parameters without exiting the routine. For example, the actions of the rider may result in the routine reversing direction, moving from block 1050 to block 1045 and block 1020 for example. The routine may operate in two directions without affecting the process.

The disclosed methods can be embodied in the form of computer or controller implemented processes and apparatuses for practicing those processes. It can also be embodied in the form of computer program code containing instructions embodied in tangible media, such as floppy diskettes, CD-ROMs, hard drives, or any other computer-readable storage medium, wherein, when the computer program code is loaded into and executed by a computer or controller, the computer becomes an apparatus for practicing the method. The methods disclosed herein may also be embodied in the form of computer program code or signal, for example, whether stored in a storage medium, loaded into and/or executed by a computer or controller, or transmitted over some transmission medium, such as over electrical wiring or cabling, through fiber optics, or via electromagnetic radiation, wherein, when the computer program code is loaded into and executed by a computer, the computer becomes an apparatus for practicing the method. When implemented on a generalpurpose microprocessor, the computer program code segments configure the microprocessor to create specific logic circuits.

While certain combinations of features relating to a bicycle have been described herein, it will be appreciated that these certain combinations are for illustration purposes only and that any combination of any of these features may be employed, explicitly or equivalently, either individually or in combination with any other of the features disclosed herein, in any combination, and all in accordance with an embodiment of the invention. Any and all such combinations are contemplated herein and are considered within the scope of the invention disclosed.

In one embodiment, a bicycle damping system is providing having a valve box with a first and second fluid path. A cylinder having a first and second chamber is coupled to a first shaft. The first shaft is arranged coaxially within the cylinder where a coaxial borehole is fluidly coupled to the valve box first fluid path on a first end of the shaft. The borehole is further fluidly coupled to the first chamber on a second end of the shaft. A second shaft is arranged coaxially and outboard of and coupled to the first shaft. The second shaft is arranged coaxially within the cylinder and includes a borehole fluidly coupled on a first end of the second shaft to the valve box second fluid path. The second shaft borehole is also coupled to the second chamber on a second end of the second shaft. A piston is coupled to the first shaft and arranged to separate the first and second chambers. The piston may further include an orifice that is fluidly coupled to the first chamber and the second chamber. In some embodiments, the valve box is mounted to the first shaft.

In another embodiment, the bicycle damping system includes a first sensor and a controller electrically coupled to the valve box and the sensor. The controller includes a processor that is responsive to executable instructions for controlling the flow of fluid through the valve box in response to a signal from the sensor. The first sensor may be an optical encoder that is coupled to the cylinder. Where the sensor is an optical encoder, the processor is responsive for calculating a position and velocity of the first shaft in response to the signal from the optical encoder. Alternatively, the first sensor may also be an accelerometer that is coupled to a wheel hub.

In another embodiment, the bicycle damping system may further include a second sensor coupled to the cylinder. The second sensor generates a signal indicative of the first shaft position relative to the cylinder. This second sensor may be a Hall effect sensor.

In another embodiment, a bicycle control system is provided. The control system includes a controller having at least one input and at least one output. A battery is electrically coupled to the controller. A first sensor is electrically coupled to the controller. A microcontroller is electrically coupled between the controller and the first sensor. The microcontroller includes a first processor that is responsive for executing instructions to send a first signal to the controller in response to a signal being received by the microcontroller from the first sensor. In yet another embodiment, the bicycle control system further includes a second sensor electrically coupled to the microcontroller. The first processor is further responsive to sending a second signal to the controller in response to a signal being received by the microcontroller from the second sensor. In some embodiments, the controller and battery are sized to fit in a bicycle head tube.

In another embodiment, the controller of the bicycle control system includes a second processor that is responsive for executing instructions for calculating a suspension system parameter in response to receiving the first signal. The controller may then send a third signal representative of the suspension system parameter to the microcontroller. The bicycle control system may further comprise a display mounted to the bicycle steering tube and electrically coupled to the controller. The display may be a liquid crystal display having a resolution of at least 176 pixels in a first direction and at least 132 pixels in a direction perpendicular to the first direction.

The bicycle control system may also include a user input device electrically coupled to the controller. The user input device is movable between at least five different positions. The user input device sends a fourth signal to the controller in response to the user input device being moved to one of the five positions. In one embodiment, the user input device includes a lever having a first position located in a first direction relative to an origin and a second position located in a second direction relative to the origin. The first and second directions are arranged substantially 180 degrees apart.

The lever may also have a third position located in a third direction relative to the origin, and a fourth position located in a fourth direction relative to the origin. The third and fourth directions are 180 degrees apart. The third and fourth directions are also each arranged substantially 90 degrees apart from the first and second directions respectively. In some embodiments, the lever also has a fifth position located at the origin.

As disclosed, some embodiments of the invention may include some of the following advantages: an active control of the suspension system in response to measured terrain conditions; a valve box coupled to the end of a suspension shaft within the upper cylinder of the suspension system; a suspension system with parallel paths for fluid flow to assist with the damping of impacts on the bicycle; a main controller and battery housed within a head tube shielding the components from water and debris; an easy to manipulate user interface that allow operation while riding to allow the rider to interact with the control system without having to look at a display; a distributed control system that includes one or more microcontrollers that provide communications control with sensors arranged on the bicycle to reduce the amount of wiring an assembly costs.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best or only mode contemplated for carrying out this invention, but that the invention will include all embodiments falling within the scope of the appended claims. Also, in the drawings and the description, there have been disclosed exemplary embodiments of the invention and, although specific terms may have been employed, they are unless otherwise stated used in a generic and descriptive sense only and not for purposes of limitation, the scope of the invention therefore not being so limited. Moreover, the use of the terms first, second, etc. do not denote any order or importance, but rather the terms first, second, etc. are used to distinguish one element from another. Furthermore, the use of the terms a, an, etc. do not denote a limitation of quantity, but rather denote the presence of at least one of the referenced item.

## Claims

1. A distributed control system (190) for a bicycle (100) comprising:
a plurality of functional components (140,150,210,405), each functional component having an associated microcontroller (642,644,646,406) having an address;
a controller (400) having at least one input and at least one output;
a communication bus (640) operably coupling said controller (400) with each of said microcontrollers (642,644,646,406);
wherein said controller (400) includes a first processor (600) responsive to executable computer instructions when executed on the first processor for transmitting a first signal comprised of an address and a first data on said communication bus (640).

2. The distributed control system of Claim 1 wherein said plurality of functional components is comprised of:
a battery (405) having a first microcontroller (406);
a user interface device (150) having a second microcontroller (644); and,
a display (140) having a third microcontroller (642).

3. The distributed control system of Claim 2 wherein said plurality of functional components further includes a suspension device comprised of:
a cylinder (205);
a valve box (210) having at least one valve (300) fluidly coupled to said cylinder;
a sensor (315,320,325) operably coupled to said cylinder; and,
a fourth microcontroller (505) electrically coupled to said sensor.

4. The distributed control system of Claim 2 or 3 wherein:
said first microcontroller (406) comprises a second processor and a memory device, said second processor being responsive to executable computer instructions when executed on the second processor for retrieving a first data from said memory in response to a second signal from said controller (400); and/or
said second microcontroller (644) comprises a third processor responsive to executable computer instructions when executed on the third processor for translating a second data in response to a third signal from said user interface device into a third data compatible with said controller (400); and/or
said third microcontroller (642) comprises a fourth processor responsive to executable computer instructions when executed on the fourth processor for translating a fourth data in response to a fourth signal from said controller into a fifth data compatible with said display (140); and/or
said fourth microcontroller (505) comprises a fifth processor responsive to executable computer instructions when executed on the fifth processor for transmitting a fifth signal to said at least one valve in response to said controller 400) receiving a sixth signal from said sensor (315,320,325).

5. A distributed control system (190) for a bicycle (100) comprising:
a controller (400);
a battery (405) electrically coupled to said controller (400);
at least one first sensor coupled to said battery (405), wherein said at least one first sensor coupled to measure a characteristic of said battery; and,
a first microcontroller (406) electrically coupled between said controller (400) and said battery (405) and operably coupled to said at least one first sensor, wherein said first microcontroller (406) comprises a first processor responsive to executable computer instructions when executed on the first processor for sending a first signal to said controller (400) in response to a second signal being received by said first microcontroller from said at least one first sensor.

6. The distributed control system of Claim 5 wherein said at least one first sensor is a temperature sensor or a circuit arranged to calculate electrical properties of said battery (405).

7. The distributed control system of Claim 5 or 6 further comprising:
a display (140) operably coupled to said controller (400);
a second microcontroller (642) operably coupled between said display and said controller;
wherein said second microcontroller comprises a second processor responsive to executable computer instructions when executed on said second processor for translating a first data received in a third signal to a second data compatible for displaying said first data on said display.

8. The distributed control system of Claim 5, 6 or 7 further comprising:
a user input device (150) operably coupled to said controller (400), said user input device movable between a plurality of positions, said user input device having at least one second sensor associated with one of said plurality of positions;
a third microcontroller (644) operably coupled between said user input device and said controller; and,
wherein said third microcontroller comprises a third processor responsive to executable computer instructions when executed on said third processor for translating a third data indicating a position of said user input device to a fourth data compatible with said controller in response to a received in a fourth signal being received from said at least one second sensor.

9. The distributed control system of any of Claims 5 to 8 further comprising:
a cylinder (205);
a valve box (210) having at least one valve (300) fluidly coupled to said cylinder;
at least one third sensor (325) operably coupled to said cylinder;
a fourth microcontroller (505) operably coupled to said at least one valve and said at least one third sensor; and,
wherein said fourth microcontroller comprises a fourth processor responsive to executable computer instructions when executed on the fourth processor for sending a fifth signal to said at least one valve in response to a sixth signal being received by said fourth microcontroller from said at least one third sensor.

10. A method of operating a bicycle suspension system with a bicycle control system (190) having a graphical user interface including a processor, a display (140) and a selection device, the method comprising:
transmitting a first signal from a first functional component (405;150) to a first microcontroller (406;644) associated with said first functional component;
translating with said first microcontroller (406;644) said first signal into a second signal compatible with a controller (400);
transmitting said second signal from said first microcontroller (406;644) to said controller (400).

11. The method of Claim 10 further comprising:
transmitting a third signal from said controller (400) to a second microcontroller (642) associated with a second functional component (140);
translating with said second microcontroller said third signal into a fourth signal compatible with said second functional component (140); and,
transmitting said fourth signal from said second microcontroller (642) to said second functional component (142).

12. The method of Claim 11 wherein:
said second functional component is a display (140);
said third signal is a first data representing a graphical image; and,
said fourth signal is a second data with voltage values associated with pixels on said display.

13. The method of Claim 11 or 12 wherein:
said first functional component is a battery (405);
said first signal is a third data representing a charge capacity of said battery;
and,
said second signal is a fourth data representing a charge capacity value of said battery.

14. The method of Claim 11 or 12 wherein:
said first functional component is a user interface device (150);
said first signal is a fifth data representing the activation of a first sensor on said user interface device; and,
said second signal is a sixth data representing a position value of said user interface device.

15. The method of Claim 11 further comprising:
receiving a fifth signal from a second sensor associated with said first functional component, wherein said first functional component is a valve fluidly coupled to a suspension cylinder and said second sensor is operably coupled to said suspension cylinder;
transmitting a sixth signal to said first microcontroller;
translating with said first microcontroller said sixth signal into a seventh signal;
transmitting said seventh signal to said valve; and,
wherein said fifth signal is a seventh data representing the position of a second sensor operably coupled to said cylinder; and,
said sixth signal is a sixth data representing a position value of said valve.
